# EUROPÄISCHE PATENTSCHRIFT

(11) **EP 3 587 840 B1**
(45) Veröffentlichungstag und Bekanntmachung des Hinweises auf die Patenterteilung: **05.05.2021**
(21) Anmeldenummer: 19175159.3
(22) Anmeldetag: 17.05.2019
(51) Int. Cl.: F16B 13/12, F16B 13/06

(54) **DÜBEL MIT VON DEHNBARER MATRIX UMGEBENEN SPREIZSTEGEN**
DOWEL WITH STRETCHABLE BEAMS SURROUNDED BY EXPANDABLE MATRIX
CHEVILLE POURVUE DE BRIDES EXPANSIBLES ENTOURÉES DE MATRICE EXTENSIBLE

(30) Priorität: 29.06.2018 DE 102018115861; 29.06.2018 DE 102018115862; 25.01.2019 DE 202019100448 U
(43) Veröffentlichungstag der Anmeldung: 01.01.2020
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Dilg, Haeusler, Schindelmann Patentanwaltsgesellschaft mbH

(56) Entgegenhaltungen:
- EP-A1- 3 175 130
- DE-A1-102013 107 075

## Beschreibung

Die Erfindung betrifft einen Dübel, ein Verfahren zum Herstellen eines Dübels, ein Montagekit, eine Montageanordnung und ein Verfahren zum Montieren eines Dübels.

Ein Dübel ist ein in der Verbindungstechnik gebrauchtes Bauteil. Er wird bei Werkstoffen angewendet, in die sich eine Schraube nicht unmittelbar eindrehen lässt. Dübel werden in ein zylindrisches Loch in gemauerte, betonierte oder mit Platten versehene Wände, Decken oder Böden als Zwischenteil eingesetzt. Beim Eindrehen der Schraube spreizt sich der Dübel. Durch Kraftschluss zwischen Dübel und umgebendem Material und manchmal mit Formschluss ist die Schraube gegen Herausziehen gesichert.

DE 10 2013 107075 A1 und DE 10 2013 107079 A1 offenbaren Dübel aus zwei Kunststoffen.

Wenngleich herkömmliche Dübel für verschiedene Anwendungen sehr leistungsstark sind, kann es bei Verwendung unterschiedlich dicker Schrauben in einigen Fällen zu einer unzureichenden Verspreizung von Spreizelementen oder zu einer Schädigung des Dübels kommen.

Es ist eine Aufgabe der vorliegenden Erfindung, einen Dübel bereitzustellen, der mit Befestigungselementen unterschiedlicher Dimensionen fehlerrobust und in definierter und reproduzierbarer Weise in einen Untergrund gesetzt werden kann.

Diese Aufgabe wird durch die Gegenstände gemäß den unabhängigen Ansprüchen gelöst. Bevorzugte Ausgestaltungen ergeben sich aus den abhängigen Ansprüchen.

Gemäß einem Ausführungsbeispiel der vorliegenden Erfindung ist ein Dübel geschaffen, der eine erste Komponente mit einer Mehrzahl von in Umfangsrichtung angeordneten ersten Spreizstegen (insbesondere mit einer Mehrzahl von sich axial erstreckenden und entlang eines Umfangs des Dübels verteilt angeordneten ersten Spreizstegen) und eine mit der ersten Komponente verbundene zweite Komponente mit einer (insbesondere elastisch) dehnbaren zusammenhängenden Matrix aufweist, welche die ersten Spreizstege zumindest abschnittsweise (insbesondere nur abschnittsweise) umfänglich umgibt (insbesondere dübelkopfseitig, d.h. am Dübelkopf bzw. im Bereich des Dübelkopfs).

Gemäß einem anderen Ausführungsbeispiel der vorliegenden Erfindung ist ein Montagekit geschaffen, das mindestens einen Dübel mit den oben beschriebenen Merkmalen und mindestens ein Befestigungselement (insbesondere eine Schraube oder einen Bolzen) zum Einführen in den Dübel aufweist, insbesondere mindestens zwei Befestigungselemente (insbesondere Schrauben) mit unterschiedlichen Durchmesser.

Gemäß noch einem anderen Ausführungsbeispiel der vorliegenden Erfindung ist eine Montageanordnung bereitgestellt, die ein Montagekit mit den oben beschriebenen Merkmalen und einen Untergrund aufweist, wobei der Dübel in den Untergrund eingeführt ist und das Befestigungselement in den Dübel eingeführt ist.

Gemäß einem anderen Ausführungsbeispiel der vorliegenden Erfindung ist ein Verfahren zum Herstellen eines Dübels bereitgestellt, wobei das Verfahren ein Bilden einer ersten Komponente mit einer Mehrzahl von in Umfangsrichtung angeordneten ersten Spreizstegen, und ein Bilden einer mit der ersten Komponente verbundenen zweiten Komponente mit einer dehnbaren zusammenhängenden Matrix aufweist, welche die ersten Spreizstege zumindest abschnittsweise umfänglich umgibt.

Gemäß noch einem anderen Ausführungsbeispiel der vorliegenden Erfindung ist ein Verfahren zum Montieren eines Dübels mit den oben beschriebenen Merkmalen in einem Untergrund bereitgestellt, wobei das Verfahren ein Einführen des Dübels in ein Bohrloch in dem Untergrund, und ein nachfolgendes Einführen eines Befestigungselements in eine Öffnung des Dübels aufweist, wodurch die ersten Spreizstege aufspreizen und/oder verknoten und die die ersten Spreizstege umgebende Matrix gedehnt wird, um dadurch die ersten Spreizstege relativ zueinander in Position zu halten.

Im Rahmen dieser Anmeldung kann unter dem Begriff "Spreizstege" insbesondere eine Mehrzahl von langgestreckten Körpern verstanden werden, die sich vor Setzen und Aktivieren des Dübels entlang einer Dübelachse erstrecken und nach Setzen des Dübels in ein Bohrloch in einem Untergrund durch drehendes Einbringen eines Befestigungselements zumindest abschnittsweise verspreizen und/oder verknoten. Durch dieses Verspreizen oder Verknoten entsteht eine formschlüssige und/oder reibschlüssige Verbindung zwischen der Anordnung aus Dübel und Befestigungselement einerseits und dem Untergrund andererseits. Ein solches Verspreizen kann ein Verknoten von Spreizstegen und/oder ein seitliches Aufweiten der Spreizstege beinhalten (insbesondere abhängig von der Konfiguration der Spreizstege und/oder der Beschaffenheit des Untergrunds, weiter insbesondere abhängig davon, ob der Untergrund ein Hohlkörper oder ein Vollkörper ist).

Im Rahmen dieser Anmeldung kann unter dem Begriff einer "dehnbaren zusammenhängenden Matrix" insbesondere eine integrale körperliche Struktur verstanden werden, die zumindest abschnittsweise manschettenförmig zumindest einen Teil der Spreizstege des Dübels zumindest abschnittsweise umhüllen kann, sodass bei vor und/oder bei einem beginnenden Aufspreizen der Spreizstege infolge eines einwirkenden Befestigungselement die zusammenhängende Matrix gedehnt wird und die Spreizstege zusammenhält. Eine solche Matrix kann beispielsweise als endseitig offene Hülse, endseitig geschlossene Kappe oder als Struktur mit komplexer Formgebung ausgebildet sein, die allerdings zumindest abschnittsweise die genannten Spreizstege radial außenseitig bzw. umfangsseitig umgibt. Die Dehnungseigenschaft der Matrix kann sich aus einer elastischen Eigenschaft des Materials der Matrix und/oder einer Dünnwandigkeit der Matrix zumindest im Bereich der Spreizstege ergeben.

Im Rahmen dieser Anmeldung können unter dem Begriff "erste Komponente und zweite Komponente" insbesondere zwei sich hinsichtlich einer Materialeigenschaft unterscheidende Bestandteile oder zwei materialgleiche oder materialverschiedene Bestandteile verstanden werden, die an einer oder mehreren Materialschnittstellen aneinander angrenzen oder gegebenenfalls dort miteinander verbunden sind. Zum Beispiel kann die erste Komponente eine erste Materialkomponente und die zweite Komponente eine andere zweite Materialkomponente sein. Insbesondere können die beiden Komponenten zwei Spritzgusskomponenten sein, die in unterschiedlichen Spritzgussprozeduren hergestellt werden. Es ist möglich, dass die erste Komponente ein erstes Bauteil und die zweite Komponente ein zweites Bauteil ist, wobei die Bauteile miteinander verbunden werden (zum Beispiel ineinander eingesteckt werden oder übereinander ausgebildet werden). Das Verbinden der Komponenten kann lösbar oder unlösbar, insbesondere reibschlüssig, formschlüssig und/oder stoffschlüssig, erfolgen und kann mindestens eine Materialschnittstelle zwischen den verbundenen Komponenten generieren.

Im Rahmen dieser Anmeldung kann unter dem Begriff "unterschiedliche Durchmesser der Befestigungselemente" insbesondere verstanden werden, dass die Durchmesser der Befestigungselemente senkrecht zu einer Axialrichtung der Befestigungselemente unterschiedlich sind. Die unterschiedlichen Durchmesser können unterschiedliche Kerndurchmesser und/oder können unterschiedliche Außendurchmesser von als Schrauben ausgebildeten jeweiligen Befestigungselementen sein. Unter einem Kerndurchmesser einer Schraube kann der Durchmesser eines Schraubenschafts ohne Hinzurechnung der auf dem Schraubenschaft ausgebildeten Gewindegänge verstanden werden oder kann der kleinste Durchmesser der Gewindegeometrie verstanden werden. Unter einem Außendurchmesser einer Schraube kann der Durchmesser der Schraube an der radialen Außenseite der Gewindegänge verstanden werden oder kann der größte Durchmesser der Gewindegeometrie verstanden werden. Wenn die Befestigungselemente als gewindefreie Bolzen ausgebildet sind, können die unterschiedlichen Durchmesser unterschiedliche Bolzendurchmesser sein.

Gemäß einem exemplarischen Ausführungsbeispiel der Erfindung kann ein Dübel mit einer dehnbaren Matrix oder Dehnmanschette versehen werden, um Spreizstege des Dübels an einem Dübelkopf zusammenzuhalten. Dadurch ist ein definiertes und reproduzierbares Aufspreizen des Dübels nach Einbringen in ein Bohrloch in einem Untergrund und nach nachfolgendem Einbringen eines Befestigungselements (insbesondere einer Schraube) in eine Öffnung des Dübels erreichbar. Infolgedessen ist eine hohe Haltekraft erzielbar. Insbesondere beim Ausbilden eines zweikomponentigen Dübels, zum Beispiel gebildet aus zwei Spritzgusskomponenten, kann eine Komponente als Schutzhülse zum Zusammenhalten der Spreizstege der anderen Komponente verwendet werden. Darüber hinaus kann mit Vorteil eine dehnbare Matrix zum endseitigen Zusammenhalten von Spreizstegen dazu dienen, dass ein einziger Dübel mit unterschiedlichen Befestigungselementen (insbesondere Schrauben) mit unterschiedlicher Länge und/oder unterschiedlicher Dicke verwendet werden kann, ohne dass die Leistungsfähigkeit des Dübels eingeschränkt wird oder der Dübel droht, beschädigt zu werden.

Im Weiteren werden zusätzliche Ausführungsbeispiele des Dübels, des Montagekits, der Montageanordnung und der Verfahren beschrieben.

Gemäß einem Ausführungsbeispiel kann die Matrix einen Kappenbereich oder Manschettenbereich eines Kopfs des Dübels bilden. Insbesondere dübelkopfseitige Endabschnitte der ersten Spreizstege können mantelflächenseitig (bei einem Kappenbereich oder Manschettenbereich) und/oder stirnseitig (bei einem Kappenbereich, nicht bei einem Manschettenbereich) von der flexiblen oder elastischen dehnfähigen Matrix umgeben sein. Eine kappenförmige Matrix im Bereich des Kopfs kann die Spreizstege entlang zumindest eines Teils einer Mantelfläche und entlang zumindest eines Teils einer Stirnfläche umschließen. Eine manschettenförmige Matrix im Bereich des Kopfs kann die Spreizstege zum Beispiel nur entlang zumindest eines Teils einer Mantelfläche, aber nicht entlang zumindest eines Teils einer Stirnfläche umschließen. Darüber hinaus kann sich die Matrix auch in andere Bereiche des Dübels hinein erstrecken und dort zum Bilden weiterer funktionaler Strukturen (insbesondere von weiteren Spreizstegen) beitragen.

Gemäß einem Ausführungsbeispiel kann die Matrix eine Mehrzahl von in Umfangsrichtung angeordnete zweite Spreizstege aufweisen. Ausgehend von einem zum Beispiel kappenförmigen oder manschettenförmigen Abschnitt im Bereich des Dübelkopfs kann sich die Matrix in im Wesentlichen axialer Richtung hin zu dem Dübelfuß so erstrecken, dass die Matrix mehrere zweite Spreizstege bildet, die mit dem Kappenabschnitt oder Manschettenabschnitt integral verbunden sind. Jeder der zweiten Spreizstege kann dabei in Umfangsrichtung des Dübels zwischen zwei jeweiligen der ersten Spreizstege des Dübels angeordnet sein. Auf diese Weise kann ein Zweikomponentendübel mit einer Vielzahl von Spreizstegen ausgebildet werden, die ein besonders stark ausgeprägtes Verspreizen ermöglichen. Außerdem ist es durch unterschiedliche Materialwahl der ersten Komponente mit den ersten Spreizstegen einerseits und der zweiten Komponente mit den zweiten Spreizstegen andererseits möglich, die physikalischen Eigenschaften der ersten Spreizstege und der zweiten Spreizstege unterschiedlich auszubilden, um die Spreizcharakteristik zu verfeinern.

Gemäß einem Ausführungsbeispiel können die ersten Spreizstege und die zweiten Spreizstege in Umfangsrichtung bündig aneinander anliegen, aber voneinander getrennt sein. Aneinander bündig oder unmittelbar angrenzende Spreizstege eines solchen Dübels können somit mechanisch unverbunden sein, aber aneinander anstoßen oder unmittelbar angrenzen. Auf diese Weise ist es einerseits möglich, dass jeder der Spreizstege jeweils unabhängig von anderen Spreizstegen bei Einführen eines Befestigungselements in die Öffnung des Dübels aufspreizen kann und dadurch zu einer festen Verankerung des Dübels in einem Bohrloch oder dergleichen in dem Untergrund beitragen kann. Durch das einander berührende Anordnen der Spreizstege ohne Zwischenräume in einem Zustand des Dübels vor Einbringen des Befestigungselements ist sichergestellt, dass der Dübel in Umfangsrichtung zwischen einander benachbarten Spreizelementen keine nennenswerten Zwischenräume ohne Befestigungswirkung aufweist. Auf diese Weise sind eine besonders sichere Verankerung des Dübels in einem Aufnahmeloch des Untergrunds und eine hohe Auszugskraft sichergestellt.

Gemäß einem Ausführungsbeispiel kann die Matrix entlang eines Hülsenabschnitts ihrer axialen Erstreckung ganz oder teilweise umfänglich geschlossen sein, in welchem Hülsenabschnitt kopfseitige Endabschnitte der ersten Spreizstege von der Matrix nach außen hin überdeckt sind. Als Hülsenabschnitt einer insbesondere komplex geformten Matrix kann jener Abschnitt der Matrix verstanden werden, der zumindest kopfseitige Endabschnitte der ersten Spreizstege radial umgibt. Dieser Hülsenabschnitt kann die ersten Spreizstege endseitig ganz bzw. lückenlos umhüllen, um vollumfänglich als Dehnkörper zu fungieren. Es ist aber auch möglich, dass der Hülsenabschnitt die ersten Spreizstege endseitig nur teilweise umhüllt und mantelseitig ein oder mehrere Öffnungen zurücklässt. Insbesondere kann die Matrix in dem Hülsenabschnitt mindestens eine Dehnungsfuge als eine solche Öffnung aufweisen. Anschaulich kann eine Dehnungsfuge die Dehnungseigenschaften der Matrix weiter fördern, indem gezielte Materialschwächungen in die Matrix eingebracht werden. Es ist auch möglich, eine solche Dehnungsfuge zumindest teilweise mit mindestens einer Rippe der ersten Komponente zu füllen. Somit kann die Verbindung zwischen der ersten Komponente und der zweiten Komponente durch ein formschlüssiges Auffüllen von Dehnungsfugen der zweiten Komponente durch Rippen der ersten Komponente verstärkt werden.

Gemäß einem Ausführungsbeispiel kann die Matrix in einem kraftfreien Zustand in dem Hülsenabschnitt eine geringere Querschnittsfläche aufweisen als ein hohlzylindrischer Dübelabschnitt (bzw. ein Spreizbereich, in dem die eigentliche Spreizung der Spreizstege auftritt) zwischen einem Fuß des Dübels und dem Hülsenabschnitt. Ein hohlzylindrischer Dübelabschnitt kann einen kreisförmigen Querschnitt aufweisen und einen axialen Abschnitt des Dübels bezeichnen, in dem in Umfangsrichtung alternierend erste Spreizstege und zweite Spreizstege nach außen hin freigelegt angeordnet sind. Hingegen kann der Hülsenabschnitt einen nichtkreisförmigen Querschnitt haben, der gegenüber dem kreisförmigen Querschnitt eine verringerte Querschnittsfläche haben kann. Dadurch können anschaulich kopfseitige Endabschnitte der ersten Spreizstege durch die Matrix besonders stark eingeschnürt werden und deren Zusammenhalt dadurch besonders wirksam gefördert werden.

Gemäß einem Ausführungsbeispiel kann die Matrix in einem kraftfreien Zustand in dem Hülsenabschnitt einen größeren Umfang aufweisen als ein hohlzylindrischer Dübelabschnitt (bzw. ein Spreizbereich, in dem die eigentliche Spreizung der Spreizstege auftritt) zwischen einem Fuß des Dübels und dem Hülsenabschnitt. Ungeachtet der geringeren Querschnittsfläche kann ein Umfang des Hülsenabschnitts größer als ein Umfang des insbesondere kreiszylindrischen Dübelabschnitt sein. Ein gezielt erhöhter Umfang des Dübels im Bereich des Hülsenabschnitts kann zum Beispiel durch eine Konfiguration des Hülsenabschnitts erreicht werden, bei dem in Umfangsrichtung konvexe Bereiche und konkave Bereiche alternierend angeordnet sind. Dadurch können die Dehnungseigenschaften im Bereich des Hülsenabschnitts gezielt erhöht werden. Anschaulich kann die wirksame Dehnungslänge durch einen erhöhten Umfang im Hülsenabschnitt erhöht werden.

Erfindungsgemäß weist die Matrix in einem kraftfreien Zustand in dem Hülsenabschnitt mindestens eine Einbuchtung, insbesondere eine Mehrzahl von in Umfangsrichtung angeordnete Einbuchtungen, auf. Solche Einbuchtungen können materialfreie Bereiche im Hülsenabschnitt sein, die während des Dehnvorgangs zeitweise Material der Matrix aufnehmen können. Zum Beispiel können in Umfangsrichtung vier Einbuchtungen des Hülsenabschnitts vorgesehen sein, von denen jeweils zwei benachbarte durch eine dazwischen angeordnete jeweilige Ausbuchtung des Hülsenabschnitts getrennt sein können.

Gemäß einem Ausführungsbeispiel kann die Matrix an einer kopfseitigen Stirnfläche ganz oder teilweise offen sein. Beispielsweise können dadurch an der kopfseitigen Stirnfläche die ersten Spreizstege gegenüber der Matrix nach außen hin freigelegt sein. Alternativ können die kopfseitigen Stirnflächen der ersten Spreizstege von einer hautartigen Sollbruchstelle der ersten Komponente bedeckt sein. Bei Einführen eines Befestigungselements kann eine Spitze des Befestigungselement die Sollbruchstelle gegebenenfalls durchstoßen. Auf diese Weise kann sichergestellt werden, dass am Dübelkopf selbst ein sehr langes Befestigungselement durchtreten kann, wohingegen mantelflächenseitig die dehnfähige Matrix die ersten Spreizstege dennoch in Position halten kann. Gemäß einem Ausführungsbeispiel kann die Matrix entlang eines Stegabschnitts (d.h. entlang eines Abschnitts der Matrix, in dem die Matrix zweite Spreizstege bildet) ihrer axialen Erstreckung bzw. entlang des Spreizbereichs erste Teilbereiche der ersten Spreizstege mit zweiten Spreizstegen überdecken und zwischen den ersten Teilbereichen angeordnete zweite Teilbereiche der ersten Spreizstege freilegen. Als Stegabschnitt der Matrix kann jener axiale Abschnitt der Matrix verstanden werden, in dem die Matrix zweite Spreizstege bildet. Anschaulich können die zweiten Spreizstege aus dem Hülsenabschnitt der Matrix in fußseitiger Richtung herauswachsen. Auf diese Weise können die zweiten Spreizstege in gewissem Umfang die ersten Spreizstege dehnfähig umschließen.

Gemäß einem Ausführungsbeispiel kann die dehnbare zusammenhängende Matrix aus einem elastischen Material hergestellt sein. Im Rahmen dieser Anmeldung kann unter dem Begriff "elastisch" insbesondere ein ausreichend weiches und/oder nachgiebig ausgebildetes und/oder elastisch deformierbares Material der Matrix verstanden werden. Bei einer elastischen Deformation infolge einer Krafteinwirkung durch ein Einführen eines Befestigungselements in eine Öffnung des in einem Bohrloch des Untergrunds befindlichen Dübels kommt es zu einer Deformation der Matrix. Eine elastische Matrix bewirkt daher eine reversibel-elastische (und keine irreversibel-plastische) Deformation bei einer Krafteinwirkung während des bestimmungsgemäßen Gebrauchs des Dübels. Eine elastische Matrix kann eine federelastische Matrix sein. Eine solche federelastische Matrix kann bei Krafteinwirkung dem hookeschen Gesetz folgen.

Gemäß einem Ausführungsbeispiel kann die dehnbare zusammenhängende Matrix derart ausgebildet sein, bei Einführen eines Befestigungselements in eine Öffnung des Dübels die ersten Spreizstege endseitig zusammenzuhalten. Auf diese Weise ist ein definiertes Setzen des Dübels möglich. Insbesondere erlaubt die zusammenhaltende Wirkung der dehnbaren Matrix das Einführen von Schrauben unterschiedlicher Länge und Dicke, ohne dass eine undefinierte Spreizung erfolgt. Bei fortgesetztem Einführen des Befestigungselements erfolgt ein Aufspreizen der Spreizelemente und dadurch eine Befestigung des Befestigungselements in dem Bohrloch mit hoher Auszugskraft.

Gemäß einem Ausführungsbeispiel können die erste Komponente und die zweite Komponente zumindest im Bereich der Matrix eine im Wesentlichen geschlossene Dübelhülse bilden. Dadurch ist zum Beispiel ein unerwünschtes Eindringen von Bohrmehl in den Dübel vermieden. Gleichzeitig kann dadurch eine Wasserdichtigkeit erreicht werden. Außerdem kann eine im Wesentlichen durchgehend geschlossene Dübelhülse die mechanische Robustheit des Dübels stärken und sicherstellen, dass der Dübel eine vollumfängliche Befestigung in dem Untergrund bewirkt, was zu hohen Auszugswerten beiträgt.

Gemäß einem Ausführungsbeispiel kann die erste Komponente eine erste Spritzgusskomponente und die zweite Komponente eine separate zweite Spritzgusskomponente sein, wobei insbesondere die erste Spritzgusskomponente von der zweiten Spritzgusskomponente zumindest teilweise überspritzt sein kann. In entsprechender Weise kann bei dem Verfahren die erste Komponente mittels eines ersten Spritzgussverfahrens und nachfolgend die zweite Komponente mittels eines separaten zweiten Spritzgussverfahrens hergestellt werden. Insbesondere kann die erste Spritzgusskomponente von der zweiten Spritzgusskomponente (insbesondere genau teilweise) überspritzt sein. Auf diese Weise kann die zweite Komponente auf die erste Komponente in einfacher Weise mittels Spritzgießens aufgespritzt werden. Gleichzeitig sorgt eine solche Kombination von zwei Spritzgusskomponenten für eine innige Verbindung dieser Komponenten und somit für eine hohe mechanische Robustheit.

Gemäß einem Ausführungsbeispiel kann die zweite Komponente aus einem anderen Material (insbesondere aus einem anderen Kunststoffmaterial) ausgebildet sein als ein Material (insbesondere ein Kunststoffmaterial) der ersten Komponente. Mit Vorteil kann die zweite Komponente aus einem Material mit einem geringeren Elastizitätsmodul (d.h. mit ausgeprägterer Elastizität) ausgebildet sein als das Material der ersten Komponente. Alternativ oder ergänzend kann die zweite Komponente aus einem Material mit einer geringeren Härte ausgebildet sein als das Material der ersten Komponente. Beispielsweise können die beiden Komponenten unterschiedliche Kunststoffmaterialien sein. Dann kann die erste Komponente eine hohe Stabilität bzw. Rigidität des Dübels sicherstellen, während die zweite Komponente ein hohes Maß an Flexibilität bzw. Nachgiebigkeit gewährleisten kann. Unter "Elastizitätsmodul" kann insbesondere ein Zusammenhang bzw. ein Verhältnis zwischen mechanischer Spannung und Dehnung bei der Verformung des jeweiligen Materials verstanden werden. Anschaulich ist der Betrag des Elastizitätsmoduls umso größer, je mehr Widerstand ein Material einer elastischen Verformung entgegensetzt. Unter "Härte" kann insbesondere ein mechanischer Widerstand verstanden werden, den ein Werkstoff der mechanischen Eindringung eines anderen Körpers entgegensetzt. Insbesondere kann die höhere Härte der ersten Komponente gegenüber einer geringeren Härte der zweiten Komponente eine höhere Shore-Härte bezeichnen. Die Shore-Härte kann auf DIN EN ISO 868 oder DIN ISO 7619-1 (jeweils in der am Prioritätstag der vorliegenden Anmeldung aktuellsten Fassung) bezogen sein.

Gemäß einem Ausführungsbeispiel kann die Verbindung zwischen der ersten Komponente und der zweiten Komponente so sein, dass zumindest abschnittsweise eine unlösbare Materialschnittstelle zwischen der ersten Komponente und der zweiten Komponente gebildet ist. Es ist allerdings auch möglich, dass die Verbindung zwischen der ersten Komponente und der zweiten Komponente dergestalt ist, dass zumindest abschnittsweise eine lösbare Materialschnittstelle zwischen den Komponenten gebildet ist, d.h. die beiden Komponenten zumindest abschnittsweise reibschlüssig und/oder formschlüssig aneinander anliegen, ohne eine insbesondere innige stoffschlüssige Verbindung miteinander einzugehen.

Gemäß einem Ausführungsbeispiel kann das Montagekit zumindest ein weiteres Befestigungselement zum Einführen in den Dübel aufweisen, wobei das zumindest eine weitere Befestigungselement gegenüber dem Befestigungselement eine andere Länge und/oder einen anderen Durchmesser aufweist. Hierbei kann ein Benutzer, abhängig von einer jeweiligen Applikation, einen einzigen Dübel mit unterschiedlich langen bzw. dicken Schrauben oder anderen Befestigungselementen verwenden, was durch das endseitige Zusammenhalten der ersten Spreizstege aufgrund der sich beim Einführen einer jeweiligen Schraube dehnenden Matrix ermöglicht wird. Die Flexibilität eines Benutzers bei der Verwendung eines Dübels zum Setzen von Schrauben oder anderen Befestigungselementen (zum Beispiel Bolzen) mit variablen Dimensionen kann dadurch erhöht werden.

Gemäß einem Ausführungsbeispiel kann das Verfahren zum Montieren, wenn der Untergrund ein Vollkörper ist, ein vollumfängliches Aufspreizen der Spreizstege des Dübels aufweisen, wobei die Enden der ersten Spreizstege durch die Matrix zusammengehalten werden können. Gemäß einem Ausführungsbeispiel kann das Verfahren zum Montieren, wenn der Untergrund ein Hohlkörper ist, ein Verknoten der Spreizstege des Dübels in mindestens einem Hohlraum des Hohlkörpers aufweisen. Diese Doppelfunktion des Dübels abhängig von der Beschaffenheit des Untergrunds ist mit dem Vorsehen der dehnbaren Matrix kompatibel.

Gemäß einem Ausführungsbeispiel ist ein Dübel geschaffen, der einen Fuß mit einer Öffnung zum Einführen eines Befestigungselements (insbesondere einer Schraube oder eines Bolzens), einen Kopf und einen Spreizbereich (insbesondere einen Bereich des Dübels, der bei Einbringen eines Befestigungselements in eine Öffnung des Dübels eine Aufspreizung erfährt, wenn der Dübel in einem Bohrloch eines als Vollkörper ausgebildeten Untergrunds eingebracht ist) zwischen dem Fuß und dem Kopf mit einer Mehrzahl von in Umfangsrichtung bündig aneinander anliegenden (insbesondere abstandsfrei oder ohne Zwischenraum aneinander anliegenden und einander daher berührenden), aber getrennten (insbesondere ohne feste Verbindung an einer Berührfläche und somit als separate Körper ausgebildeten) Spreizstegen (insbesondere langgestreckte Körper oder Materialabschnitte, die bei Einführen eines Befestigungselements in die Öffnung des Dübels eine seitliche Spreizbewegung vollführen können) aufweist.

Gemäß einem anderen Ausführungsbeispiel ist ein Verfahren zum Herstellen eines Dübels bereitgestellt, wobei das Verfahren ein Bilden eines Fußes mit einer Öffnung zum Einführen eines Befestigungselements, ein Bilden eines Kopfs und ein Bilden eines Spreizbereichs zwischen dem Fuß und dem Kopf mit einer Mehrzahl von in Umfangsrichtung bündig aneinander anliegenden, aber getrennten Spreizstegen aufweist.

Gemäß noch einem anderen Ausführungsbeispiel ist ein Verfahren zum Montieren eines Dübels mit den oben beschriebenen Merkmalen in einem Untergrund (genauer gesagt in einer Aufnahmeöffnung eines Untergrunds, zum Beispiel ein Bohrloch) bereitgestellt, wobei das Verfahren, wenn der Untergrund ein Vollkörper ist, ein vollumfängliches Aufspreizen der Spreizstege (insbesondere ein radial nach außen gerichtetes Aufspreizen der Spreizstege gegen eine Wandung des Untergrunds im Wesentlichen ohne in Umfangsrichtung spreizstegfreie Zwischenräume) des Dübels, und wenn der Untergrund ein Hohlkörper ist, ein Verknoten der Spreizstege (insbesondere ein gegenseitiges Umschlingen unterschiedlicher Spreizstege unter Bildung eines das Befestigungselement zumindest teilumfänglich umgreifenden Knäuels der Spreizstege) des Dübels in einem Hohlraum des Hohlkörpers aufweist.

Gemäß noch einem anderen Ausführungsbeispiel ist ein Montagekit geschaffen, das einen Dübel mit den oben beschriebenen Merkmalen und ein Befestigungselement (insbesondere eine Schraube oder einen Bolzen) zum Einführen in den Dübel aufweist.

Gemäß noch einem anderen Ausführungsbeispiel ist eine Montageanordnung bereitgestellt, die ein Montagekit mit den oben beschriebenen Merkmalen und einen Untergrund aufweist, wobei der Dübel in den Untergrund eingeführt ist und das Befestigungselement in den Dübel eingeführt ist.

Im Rahmen dieser Anmeldung kann unter dem Begriff "Untergrund" insbesondere ein zum Verankern des Dübels und des Befestigungselements geeigneter Körper verstanden werden. Ein solcher Untergrund oder Verankerungsgrund kann insbesondere eine Wand, weiter insbesondere eine vertikale Wand, sein. Materialien für einen solchen Untergrund sind insbesondere Holz oder Holzbaustoffe, oder aber auch Beton- und Mauerwerksbaustoffe, Metall, Gipskarton oder Kunststoffbauteile. Ferner kann ein solcher Untergrund auch ein beliebiger Kompositwerkstoff aus mehreren unterschiedlichen Materialkomponenten sein.

Im Rahmen dieser Anmeldung kann unter dem Begriff "Vollkörper" insbesondere ein Untergrund verstanden werden, der - von einer Aufnahmeöffnung (zum Beispiel ein Bohrloch) zum Aufnehmen des Dübels abgesehen - von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Untergrunds sein.

Im Rahmen dieser Anmeldung kann unter dem Begriff "Hohlkörper" insbesondere ein Untergrund verstanden werden, der im Inneren (insbesondere in einem Eindringbereich des Dübels und des Befestigungselements in den Untergrund) - zusätzlich zu einer Aufnahmeöffnung (zum Beispiel ein Bohrloch) zum Aufnehmen des Dübels - Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Hochlochziegelsteine oder poriger Leichtbeton. Auch eine Platte (zum Beispiel eine Gipsplatte), hinter der ein Hohlraum angeordnet ist, kann einen solchen Hohlkörper bilden. Gemäß einen exemplarischen Ausführungsbeispiel der Erfindung soll der Hohlkörper mindestens eine Kammer aufweisen, in der sich der Dübel verknoten kann.

Gemäß einem exemplarischen Ausführungsbeispiel der Erfindung ist ein Dübel geschaffen, bei dem voneinander separat ausgebildete Spreizstege in Umfangsrichtung direkt und ohne Zwischenraum aneinander anliegen.

Gemäß einem anderen Ausführungsbeispiel kann der beschriebene Dübel mit Vorteil sowohl in einem Vollkörperuntergrund (zum Beispiel Vollbeton) als auch in einem Hohlkörperuntergrund (zum Beispiel an einer Holz- oder Gipsplatte mit einem Hohlraum dahinter) mit hohen Auszugskräften montiert werden. Im Falle eines Vollkörpers als Untergrund können sich die Spreizstege insbesondere im Wesentlichen vollumfänglich gegen ein Aufnahmeloch in einem solchen Untergrund verspreizen und dadurch für eine sichere Verankerung des Dübels in dem Untergrund sorgen. Wird hingegen der Dübel an einem Hohlkörper als Untergrund montiert, können sich die in Umfangsrichtung voneinander abstandsfrei vorgesehenen Spreizstege bei Einbringen des Dübels in ein Durchgangsloch des Untergrunds mit dahinterliegendem Hohlraum und bei nachfolgendem (insbesondere drehenden) Einführen eines Befestigungselements in die Öffnung des Dübels die Spreizstege in dem Hohlraum verknoten und sich dabei sowohl um das Befestigungselement herumlegen als auch sich in dem Hohlraum an Material des Untergrunds (zum Beispiel an einer Rückfläche einer Platte) anlegen. Anschaulich können sich die abstandsfrei angeordneten, aber separaten Spreizelemente beim Eindrehen einer Schraube als Befestigungselement in den Dübel alle in die gleiche Richtung drehen und sich daher zum Beispiel hinter einer Deckplatte des Hohlraum aufweisenden Untergrunds aufwickeln. Auf diese Weise ist ein für verschiedenste Untergründe universal einsetzbarer Dübel mit starker Verankerungskraft und hohen Auszugswerten geschaffen.

Gemäß einem Ausführungsbeispiel können die Spreizstege erste Spreizstege und zweite Spreizstege aufweisen. Die ersten Spreizstege können am Fuß und/oder am Kopf des Dübels miteinander verbunden sein. Alternativ oder ergänzend können die zweiten Spreizstege am Fuß und/oder am Kopf des Dübels miteinander verbunden sein. Durch das Verbinden der Gruppe der ersten Spreizstege miteinander bzw. der Gruppe der zweiten Spreizstege miteinander - vorzugsweise am Kopf und am Fuß - kann ein mechanisch besonders stabiler Dübel geschaffen werden, der auch im aufgespreizten Zustand mechanisch intakt bleibt. Die gruppenweise Verbindung der ersten Spreizstege bzw. der zweiten Spreizstege am Kopf bzw. Fuß des Dübels kann zum Beispiel stoffschlüssig erfolgen, indem die genannten Strukturen integral ausgebildet werden (zum Beispiel mittels Spritzgießens). Auch eine chemische Verbindung der jeweiligen Gruppe von Spreizstegen am Kopf und/oder Fuß ist möglich. Alternativ oder ergänzend können die Spreizstege der jeweiligen Gruppe am Kopf und/oder Fuß auch mittels einer mechanischen Verzahnung unter Ausbildung eines Formschlusses miteinander verbunden werden.

Gemäß einem Ausführungsbeispiel können die ersten Spreizstege nicht (insbesondere nicht direkt bzw. nicht unmittelbar) mit den zweiten Spreizstegen verbunden sein. Anders ausgedrückt können die ersten Spreizstege im Verhältnis zu den zweiten Spreizstegen unverbunden sein. Dies ermöglicht es, die ersten Spreizstege und die zweiten Spreizstege funktional voneinander zu trennen und auch in unterschiedlicher Weise auszugestalten. Dies kann zum Beispiel dadurch erreicht werden, dass die ersten Spreizstege als Teil eines Rohlings (zum Beispiel einer ersten Spritzgusskomponente) geformt werden und nachfolgend verbleibende Leerräume unter Erzeugung der zweiten Spreizstege mit Material ausgefüllt werden (zum Beispiel unter Generierung einer zweiten Spritzgusskomponente) bzw. Teilbereiche des Rohlings überspitzt werden. Durch dieses zwei- (oder mehr-) stufige Herstellungsverfahren kann sowohl das zueinander bündige Anordnen der ersten und zweiten Spreizstege als auch das getrennte Ausbilden der ersten und zweiten Spreizstege erreicht werden.

Gemäß einem Ausführungsbeispiel können die ersten Spreizstege und die zweiten Spreizstege aus unterschiedlichen Materialien oder aus dem gleichen Material hergestellt sein. Wenn die ersten Spreizstege und die zweiten Spreizstege aus unterschiedlichen Materialien hergestellt sind, kann die jeweilige Materialwahl in Einklang mit der jeweiligen Funktion der ersten Spreizstege bzw. der zweiten Spreizstege erfolgen. Wenn die ersten Spreizstege und die zweiten Spreizstege aus demselben Material hergestellt sind, können gegebenenfalls unerwünschte Materialbrücken vermieden und etwaige Probleme mit unterschiedlichen Wärmeausdehnungskoeffizienten und dergleichen vermieden werden.

Gemäß einem Ausführungsbeispiel können die ersten Spreizstege und die zweiten Spreizstege in Umfangsrichtung alternierend angeordnet sein. Mit anderen Worten können sich in Umfangsrichtung jeweils ein erster Spreizsteg und ein zweiter Spreizsteg abwechseln. Dadurch ist eine sehr homogene Krafteinleitung von dem Dübel in den Untergrund ermöglicht.

Gemäß einem Ausführungsbeispiel können die ersten Spreizstege und die zweiten Spreizstege zueinander formschlüssig ausgebildet sein. Eine Außenfläche des Spreizbereichs kann dann vorzugsweise vollständig geschlossen bzw. lückenfrei sein. Insbesondere können Teile der ersten Spreizstege in Ausnehmungen einer Struktur eingepasst sein, die von den zweiten Spreizstegen und gegebenenfalls diese verbindenden Verbindungsstrukturen gebildet sind. Auf diese Weise ist ein leicht handhabbarer und kompakter Dübel mit universeller Einsetzbarkeit in unterschiedlichen Untergründen geschaffen.

Gemäß einem Ausführungsbeispiel können die ersten Spreizstege dünner (oder nur teilweise dünner, insbesondere zur Erhaltung von Flexibilität) und aus einem festeren Material als die zweiten Spreizstege ausgebildet sein. Die dünnere Ausbildung der ersten Spreizstege kann sich hierbei insbesondere auf die Umfangsrichtung des Dübels beziehen. Alternativ können die zweiten Spreizstege dünner und aus einem festeren Material als die ersten Spreizstege ausgebildet sein. Die Festigkeit kann sich zum Beispiel auf eine Shore-Härte, eine Bruchdehnung oder eine Schlagzähigkeit beziehen. Auf diese Weise kann bei einem jeweiligen Spreizsteg eine räumlich kompakte Ausgestaltung durch Verwendung eines robusteren Materials ausgeglichen werden.

Gemäß einem Ausführungsbeispiel kann das festere Material ein Hartkunststoff oder ein faserverstärkter Kunststoff sein. Zum Beispiel kann ein Hartkunststoff eine höhere Shore-Härte, eine höhere Bruchdehnung und/oder eine höhere Schlagzähigkeit haben als Polyethylen.

Gemäß einem Ausführungsbeispiel kann das weniger feste Material ein Weichkunststoff sein. Ein solcher Weichkunststoff kann zum Beispiel Polyethylen sein.

Gemäß einem Ausführungsbeispiel können die ersten Spreizstege und die zweiten Spreizstege eine unterschiedliche Flexibilität (oder eine unterschiedliche Rigidität) oder eine unterschiedliche Elastizität (d.h. ein unterschiedliches Elastizitätsmodul) aufweisen. Zum Beispiel können die ersten Spreizstege mechanisch flexibel oder elastisch und die zweiten Spreizstege rigide ausgebildet sein, oder umgekehrt. Auf diese Weise können die Eigenschaften des Dübels auf eine bestimmte Applikation hin angepasst werden.

Gemäß einem Ausführungsbeispiel können die ersten Spreizstege zumindest abschnittsweise von einer zusammenhängenden Matrix umfänglich umgeben sein, welche Matrix auch die zweiten Spreizstege aufweist. Anders ausgedrückt können die ersten Spreizstege in eine zusammenhängende Matrix, welche auch die zweiten Spreizstege umfasst, eingebettet sein. Eine solche zusammenhängende Matrix oder zusammenhängende Struktur kann zum Beispiel die Verbindung der zweiten Spreizstege am Kopf und/oder Fuß des Dübels bewerkstelligen. Die Matrix kann durch eine Spritzgussprozedur hergestellt werden. Mittels einer anderen Spritzgussprozedur können Aussparungen der Matrix unter Bildung der ersten Spreizstege gefüllt werden.

Gemäß einem Ausführungsbeispiel kann der Dübel als Kunststoffdübel ausgebildet sein. Insbesondere kann der Dübel nur aus Kunststoff bestehen. Dies ermöglicht eine wenig aufwendige Fertigung (zum Beispiel mittels Spritzgießens), die angesichts des vollumfänglichen Vorsehens der Spreizstege mit einer hohen Verankerungskraft des Dübels in einem Untergrund kombiniert werden kann.

Gemäß einem Ausführungsbeispiel können die ersten Spreizstege und die zweiten Spreizstege miteinander verzahnt sein. Durch eine gegenseitige Verzahnung der als separate Körper ausgebildeten, aber miteinander in Berührkontakt stehenden ersten und zweiten Spreizstege kann sowohl die Kontaktfläche zwischen benachbarten Spreizstegen erhöht als auch eine formschlüssige Kopplung der einander berührenden Spreizstege ermöglicht werden. Zum Beispiel können Zahnstrukturen in Umfangsrichtung der ersten Spreizstege ausgebildet werden, die mit invers geformten Zahnstrukturen entlang von Seiten der zweiten Spreizstege in Eingriff sind.

Gemäß einem Ausführungsbeispiel kann zumindest ein Teil der Spreizstege in Axial- oder Setzrichtung des Dübels alternierend breitere Abschnitte und schmälere Abschnitte aufweisen. Die abwechselnd breiteren und schmäleren Abschnitte der Spreizstege können durch die oben beschriebenen Zahnstrukturen gebildet sein.

Gemäß einem Ausführungsbeispiel kann der Spreizbereich in Umfangsrichtung spaltfrei geschlossen sein. Anschaulich weist gemäß der beschriebenen Ausführungsform der Spreizbereich keine Schlitze zwischen Spreizstegen auf und ist daher (zumindest im Wesentlichen) vollumfänglich geschlossen. Gemäß einem solchen bevorzugten Ausführungsbeispiel kann der Dübel entlang seines gesamten Umfangs oder zumindest im Wesentlichen entlang seines gesamten Umfangs von Zwischenräumen frei sein, bevor das Befestigungselement in die Öffnung des Dübels eingeführt wird. Auf diese Weise ist es möglich, mittels der Spreizstege entlang des gesamten Umfangs des Dübels eine im Wesentlichen gleiche radial nach außen gerichtete Befestigungskraft auf einen Untergrund auszuüben, in den der Dübel samt Befestigungselement eingeführt ist. Wenn der gesamte (oder im Wesentlichen der gesamte) Umfang des Dübels mit Kunststoff gefüllt ist, kann durch Vermeiden größerer Luftlöcher zwischen benachbarten Spreizstegen auch ein unerwünschter Verlust an Haltekraft vermieden werden.

Gemäß einem Ausführungsbeispiel können die Spreizstege ausgebildet sein, bei Einführen eines Befestigungselements in den, in einen als Vollkörper ausgebildeten Untergrund eingeführten Dübel gemeinsam aufzuspreizen. Wird also zum Beispiel eine Schraube in die Öffnung des Dübels eingedreht, der in ein Sackloch oder Durchgangsloch des Vollkörpers eingeführt ist, übt die Schraube (oder ein anderes Befestigungselement) eine radial nach außen gerichtete Kraft auf die in Umfangsrichtung spaltfrei einander berührend und aneinander angestückten Spreizstege aus und verspreizt diese gegen den Untergrund. Auf diese Weise ist eine sehr zuverlässige Verankerung von Dübel und Befestigungselement in dem Vollkörper sichergestellt, da in Umfangsrichtung im Wesentlichen durchgehend eine Übertragung einer radial nach außen gerichteten Befestigungskraft von dem Dübel auf den Untergrund erfolgt.

Gemäß einem Ausführungsbeispiel können die Spreizstege ausgebildet sein, bei Einführen eines Befestigungselements in den, in einen als Hohlkörper ausgebildeten Untergrund eingeführten Dübel miteinander zu verknoten. Dieselben Spreizstege, die bei Einführen des Dübels in einen als Vollkörper ausgebildeten Untergrund eine nach außen gerichtete vollumfängliche Verspreizung ermöglichen, können bei alternativem Einführen des Dübels in einen als Hohlkörper ausgebildeten Untergrund durch eine Setzkraft des Befestigungselements vom Kopf des Dübels gelöst oder abgetrennt werden und dann (insbesondere bei Einwirken eines Drehmoments infolge des Einbringens des als Schraube ausgebildeten Befestigungselements in den Dübel) eine verdrillende Verknotung miteinander erfahren. Anschaulich können freie Enden der von dem Kopf gelösten bzw. abgetrennten ersten und zweiten Spreizstege unter dem Einfluss eines Drehmoments oder einer anderen geeigneten Kraft miteinander verhaken und dann eine Knotenstruktur in dem Hohlraum (zum Beispiel an einer Rückwand einer den Hohlraum begrenzenden Platte) ausbilden.

Gemäß einem Ausführungsbeispiel des Dübels kann der Kopf vor Einbringen des Befestigungselements in den Dübel geschlossen sein. Anschaulich kann der Kopf als geschlossene Kappe ausgebildet sein, die im montierten Zustand des Dübels im Bohrlochtiefsten angeordnet sein kann. Auf diese Weise kann vermieden werden, dass Bohrmehl, Schmutz, etc. in die Öffnung des Dübels zum Aufnehmen des Befestigungselements eindringt.

Gemäß einem Ausführungsbeispiel kann der Kopf eine Sollbruchstelle aufweisen, die bei Einbringen eines Befestigungselements in den Dübel unter Öffnung des Kopfes aufgebrochen werden kann bzw. aufzubrechen ist. Zum Beispiel kann in einer Stirnfläche des Kopfs eine (beispielsweise kreuzförmige) Opferstruktur integriert werden, die an der (zum Beispiel umlaufenden) Sollbruchstelle vom Rest des beispielsweise kappenförmigen Kopfes umgeben ist. Beispielsweise ist es möglich, einen Kappenbereich des Kopfes gemeinsam mit einer Matrix auszubilden, die auch die zweiten Spreizstege und deren kopfseitige bzw. fußseitige Verbindungsstrukturen enthält. Die durch die Sollbruchstelle von der Matrix getrennte Opferstruktur kann dann zum Beispiel gemeinsam mit den ersten Spreizstegen geformt werden.

Gemäß einem Ausführungsbeispiel kann der Kopf Dehnungsfugen aufweisen, die ganz oder teilweise mit Rippen gefüllt sind. Die Dehnungsfugen können Aussparungen in der Matrix sein, wohingegen die Rippen gemeinsam mit den ersten Spreizstegen gebildet werden können. Das Zusammenspiel der Dehnungsfugen mit den Rippen bewirkt, dass das Befestigungselement leicht in die Öffnung des Dübels eingeführt werden kann und eine wirksame radiale Aufspreizung der Spreizstege bewerkstelligen kann.

Gemäß einem Ausführungsbeispiel kann zumindest ein Teil der Dehnungsfugen eine von 90° zu einer Axialrichtung des Dübels abweichende Schrägwinkelstellung aufweisen. Durch die Schrägstellung von Dehnungsfugen und zugehörigen Rippen kann eine gewünschte Aufweitung des Durchmessers ermöglicht werden, wenn das Befestigungselement in die Öffnung des Dübels eingeführt wird.

Gemäß einem Ausführungsbeispiel kann der Fuß eine Mitdrehsicherung aufweisen, insbesondere ausgebildet als in Umfangsrichtung außenseitig verteilt angeordnete und radial nach außen überstehende Dorne. Eine solche Mitdrehsicherung verunmöglicht oder unterdrückt, dass sich der Dübel unerwünscht mitdreht, wenn ein zum Beispiel als Schraube ausgebildetes Befestigungselement in die Öffnung des Dübels eingedreht wird. Dadurch kann ein durch ein unerwünschtes Mitdrehen des Dübels beim Setzen des Befestigungselements einhergehender Verlust an Befestigungskraft des Dübels in dem Untergrund vermieden werden.

Gemäß einem Ausführungsbeispiel kann zumindest im Spreizbereich ein Aufnahmekanal (der die axiale Fortsetzung der Öffnung des Dübels im Inneren des Dübels darstellt) zum Aufnehmen eines Befestigungselements im Inneren des Dübels mehrere innenseitig hineinragende Überstände aufweisen, die als innenseitige Endbereiche von zumindest einem Teil der (insbesondere ersten) Spreizelemente ausgebildet sein können. Insbesondere können die innenseitigen Überstände (insbesondere ausschließlich) durch die ersten Spreizstege gebildet sein. Ein Einführen des Befestigungselements in die Öffnung bzw. den Aufnahmekanal des Dübels führt dann zunächst zu einem Aufspreizen der ersten Spreizstege. Die zweiten Spreizstege können bei der radial nach außen gerichteten Bewegung der ersten Spreizstege reibschlüssig mitgenommen werden bzw. können bei fortgesetztem Einführen des Befestigungselements nach außen aufgespreizt werden.

Gemäß einem Ausführungsbeispiel können der Kopf und/oder der Fuß ausgebildet sein, dass dort im Betrieb keine Spreizung erfolgt. Die beiden einander gegenüberliegenden Endbereiche des Dübels, die Fuß und Kopf bilden, können somit der Stabilität dienen, wohingegen ein dazwischen angeordneter Mittenbereich die Spreizfunktion des Dübels verwirklicht.

Gemäß einem Ausführungsbeispiel kann das Verfahren ein Herstellen der Spreizstege aufweisen, bei dem zunächst erste Spreizstege gebildet werden und erst nachfolgend zweite Spreizstege gebildet werden. Zum Beispiel können die ersten Spreizstege als Rohling oder Teil eines Rohlings gebildet werden, dessen Zwischenräume dann durch Material der zweiten Spreizstege ausgefüllt werden können. Auf diese Weise können Bereiche des Dübels, die herkömmlich materialfrei sind, durch zusätzliche Spreizelemente, Spreizschenkel oder Spreizstege ausgefüllt werden, wodurch eine Befestigungskraft des Dübels in einem Untergrund erhöht werden kann.

Gemäß einem Ausführungsbeispiel können bei dem Verfahren die ersten Spreizstege mittels eines ersten Spritzgussverfahrens und nachfolgend die zweiten Spreizstege mittels eines nachfolgenden zweiten Spritzgussverfahrens hergestellt werden. Zwei aufeinanderfolgende Spritzgussverfahren sind besonders gut geeignet, den Spreizbereich mit in Umfangsrichtung bündig aneinander anliegenden, aber getrennten Spreizstegen herzustellen.

Gemäß einem Ausführungsbeispiel können bei dem Verfahren die ersten Spreizstege mittels eines ersten Werkzeugs (insbesondere mittels eines ersten Spritzgusswerkzeugs) und nachfolgend die zweiten Spreizstege mittels eines anderen zweiten Werkzeugs (insbesondere mittels eines zweiten Spritzgusswerkzeugs) hergestellt werden. Es können also zwei unterschiedliche Spritzgusswerkzeuge zum Einsatz kommen, deren jeweilige Formgebung durch die durch sie auszubildenden Strukturmerkmale des Dübels festgelegt ist.

Gemäß einem Ausführungsbeispiel kann ein Einbringen des Dübels und nachfolgend des Befestigungselements in den Untergrund nach Bilden einer Vorbohrung in dem Untergrund erfolgen. Eine solche Vorbohrung in einem Untergrund, der als Vollkörper ausgebildet ist, kann ein Sackloch sein. In einem Untergrund, der als Hohlkörper ausgebildet ist, kann die Vorbohrung ein Durchgangsloch sein, das sich bis in mindestens einen ersten Hohlraum hinein erstreckt.

Im Folgenden werden exemplarische Ausführungsbeispiele der vorliegenden Erfindung mit Verweis auf die folgenden Figuren detailliert beschrieben.

Die Beispiele gemäß Figuren 1 bis 10 sind nicht erfindungsgemäß und dienen lediglich der Veranschaulichung.
Figur 1 zeigt eine dreidimensionale Ansicht eines Dübels gemäß einem exemplarischen Ausführungsbeispiel der Erfindung mit elastischer manschettenförmiger Matrix.
Figur 2 zeigt eine erste Spritzgusskomponente des Dübels gemäß Figur 1.
Figur 3 zeigt eine zweite Spritzgusskomponente des Dübels gemäß Figur 1. Figur 4 zeigt eine Seitenansicht des Dübels gemäß Figur 1.
Figur 5 zeigt eine Schnittansicht des Dübels gemäß Figur 1 bis Figur 4 entlang einer in Figur 4 dargestellten Schnittebene A-A.
Figur 6 zeigt eine Schnittansicht des Dübels gemäß Figur 1 bis Figur 4 entlang einer in Figur 4 dargestellten Schnittebene B-B.
Figur 7 zeigt eine Schnittansicht des Dübels gemäß Figur 1 bis Figur 4 entlang einer in Figur 4 dargestellten Schnittebene C-C.
Figur 8 zeigt eine räumliche Ansicht in ein Inneres des Dübels gemäß Figur 1 bis Figur 7.
Figur 9 zeigt einen Dübel, bei dem Spreizstege in einem als Vollkörper ausgebildeten Untergrund aufgespreizt sind.
Figur 10 zeigt den Dübel gemäß Figur 9, bei dem die Spreizstege in einem als Hohlkörper ausgebildeten Untergrund verknotet sind.
Figur 11 zeigt eine Seitenansicht eines Dübels gemäß einem anderen Ausführungsbeispiel der Erfindung mit elastischer manschettenförmiger Matrix.
Figur 12 zeigt eine Schnittansicht des Dübels gemäß Figur 11.
Figur 13 zeigt eine dreidimensionale Ansicht einer ersten Spritzgusskomponente eines Dübels mit elastischer manschettenförmiger Matrix gemäß einem exemplarischen Ausführungsbeispiel der Erfindung.
Figur 14 zeigt eine dreidimensionale Ansicht einer zweiten Spritzgusskomponente eines Dübels mit elastischer manschettenförmiger Matrix gemäß einem exemplarischen Ausführungsbeispiel der Erfindung.
Figur 15 zeigt eine dreidimensionale Ansicht eines Dübels gemäß einem exemplarischen Ausführungsbeispiel der Erfindung mit elastischer manschettenförmiger Matrix, der aus der in Figur 13 dargestellten ersten Spritzgusskomponente und der in Figur 14 dargestellten zweiten Spritzgusskomponente gebildet ist.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Kunststoffdübel werden häufig in verschiedenen Baustoffen eingesetzt. Das Setzen und Verspreizen oder Verknoten in Untergründen wie Trockenbauwänden oder Hohlmauerwerk stellt allerdings andere Voraussetzungen an die Dübel als ein Untergrund wie Beton oder Vollmauerwerk. Problematisch für die Konstruktion eines Dübels ist es, dass zum Bereitstellen eines hohen Benutzerkomforts bzw. einer hohen Flexibilität eines Benutzers verschieden dicke Schrauben in den gleichen Dübel eingesetzt werden sollen.

Die unterschiedliche Befestigungsart Verspreizen einerseits und Verknoten andererseits, insbesondere bei Einsatz von unterschiedlichen Schraubendurchmessern, bedeuten für den Dübel unterschiedliche Anforderungen an die Konstruktion des Dübels.

Bei der Verankerung eines Dübels im Untergrund Gipskarton oder Hohlmauerwerk kommt bei der Befestigungsart Verknoten dem Dübelkopf eine große Bedeutung zu. Die Schraube soll sich in den Dübelkopf leicht einschrauben lassen, damit kein allzu großes Drehmoment entsteht. Beim Anliegen der Schraube an einem Anbauteil soll der Dübelkopf aber über die Drehbewegung ein Heranziehen und Verknoten der Dübelstege gewährleisten. Am Ende des Vorgangs soll der Dübel ein hohes Überdrehmoment zeigen, damit ein festes Anliegen des Anbauteils erzeugt wird und der Anwender das Festziehen merklich spürt.

Erschwert wird die gewünschte Funktion noch dadurch, dass für eine Dübelgröße verschiedene Durchmesser von Schrauben verwendbar sein sollen. Es ist von Bedeutung, dass der Dübelkopf auch bei einem kleinen Schraubendurchmesser eine Spreizung erfährt, damit auch in einem solchen Fall der Dübelkopf bei Auszugsversuchen in Vollbaustoffen zur Bruchlast beiträgt.

Gemäß einem exemplarischen Ausführungsbeispiel der Erfindung kann bei Kunststoffdübeln, welche aus zwei Komponenten hergestellt werden, der Dübelkopf aus harten Spreizstegen gebildet sein, in die sich das Schraubengewinde einschneiden kann, um hohe Zuglasten und ein großes

Überdrehmoment aufzunehmen. Diese Spreizstege können über die zweite, vorzugsweise weichere bzw. dehnbarere Komponente gegeneinander in Position gehalten werden. Anschaulich sind die ersten Spreizstege der ersten Komponente über eine dehnbare Matrix der zweiten Komponente dehnbar miteinander verbunden bzw. zusammengehalten. Der weichere bzw. dehnbare Kunststoff der Matrix bildet eine Art Manschette, die über die ersten Spreizstege oder Spreizschenkel gelegt ist. Eine vorteilhafte Flexibilität ergibt sich über dehnbare Querschnitte in Längsrichtung.

Die Dehnelemente oder Dehnstrukturen der Matrix in Längsrichtung können vom Querschnitt aus gesehen auch Viertelkreise, Rechtecke oder andere Formen sein, deren Kontur mit Vorteil einen größeren Umfang als das äußere Kreissegment haben kann. Dadurch kann die Manschette auf einen größeren Kreisdurchmesser gedehnt werden.

Vorteilhaft kann der Dübelkopf kann durch das Vorsehen von harten ersten Spreizstegen hohe Überdrehmomente erzeugen. Gleichzeitig kann der Dübelkopf ein leichtes Einschrauben gewährleisten und zeigt nahezu gleiche Werte bei unterschiedlichen Schraubendurchmessern.

Gemäß einem exemplarischen Ausführungsbeispiel können Spreizstege eines Dübels mittels Zweikomponenten-Spritzguss hergestellt werden, sodass diese in Umfangsrichtung bündig aneinander anliegen, aber separate Körper bleiben. Hierbei kann zunächst eine erste Komponente in einem Spritzgusswerkzeug gespritzt werden und dann die zweite Komponente unter Verwendung eines zweiten, anderen Spritzgusswerkzeugeinsatzes hinzugefügt werden. Dadurch können getrennte erste und zweite Spreizstege bündig aneinander gefertigt werden.

Hierbei ist es möglich, Spreizstege aus unterschiedlichen Materialien an Enden zum Beispiel chemisch zu verbinden und/oder durch eine mechanische Verzahnung untereinander zu verhaken.

Die Spreizstege können durch das Fertigungsverfahren konstruktiv auf einen jeweiligen Kunststoff angepasst werden, der zur Fertigung der ersten Komponente bzw. der zweiten Komponente verwendet werden kann. Zum Beispiel kann ein dünner flexibler Spreizsteg aus hartem Kunststoff gefertigt werden, wohingegen ein dicker und steifer Spreizsteg aus weichem Kunststoff gefertigt werden kann. Insbesondere können dünnere Spreizstege gemäß exemplarischen Ausführungsbeispielen der Erfindung aus einem harten oder glasfaserverstärkten Kunststoff gefertigt werden. Hierbei können zum Beispiel teilweise größere Flächen gefertigt werden, die einen größeren Spreizdruck erzeugen. Eine Flexibilität kann durch dünnere Teilstücke als Anbindungen gewährleistet werden. Eine solche Konfiguration kann zum Beispiel durch eine entsprechende Ausgestaltung von Schiebern eines Spritzgusswerkzeugs erhalten werden. Breitere Stege können aufgrund des größeren Querschnitts schwerer verdrehbar sein, weshalb dafür ein weicher Kunststoff (wie zum Beispiel Polyethylen) verwendet werden kann. Spreizstege unterschiedlicher oder gleicher Festigkeit können umlaufend versetzt angeordnet und an den Enden über die Konstruktion miteinander verbunden werden.

Gemäß einem Ausführungsbeispiel der Erfindung sind die Spreizstege nicht gerade ausgeführt, sondern können über eine Verzahnung (zum Beispiel entsprechend einem Winkel von 45°) aneinander anliegen. Beim Verdrehen des Dübels kann dann anschaulich eine axiale Verschiebung bzw. Dehnung der Spreizstege untereinander erfolgen. Wegen der (zum Beispiel mit einem Winkel von 45° ausgebildeten) Verzahnung entsteht auch eine Aufweitung oder Vergrößerung des Abstands der Spreizstege zueinander. Dadurch kann ein Knoten, der bei Setzen des Dübels in einen als Hohlkörper ausgebildeten Untergrund in dem Hohlkörper durch die miteinander wechselwirkenden Spreizstege erzeugt werden kann, im Volumen größer werden. Dies kann eine größere Abstützfläche und somit höhere Auszugskräfte bei der Befestigung in Untergründen mit Hohlraum (zum Beispiel Plattenmaterialien) bewirken.

Aufgrund des beschriebenen Herstellungsverfahrens können gemäß einem exemplarischen Ausführungsbeispiel der Erfindung die Spreizstege auch um einen vorgebbaren Winkel (bevorzugt 90°) verdreht um einen Kern angeordnet werden. Somit ist die Verknotungsrichtung vorgegeben und erleichtert. Bevorzugt kopf- und fußseitig unbefestigte erste Spreizstege (wobei zum Beispiel vier erste Spreizstege vorgesehen sein können), die mit Vorteil dübelinnenseitige Überstände aufweisen können, bewirken einen frühzeitigen Beginn des Spreizvorgangs beim Einführen eines Befestigungselements in eine Öffnung des Dübels. Von vorne nach hinten durchgehende zweite Spreizstege (wobei zum Beispiel vier zweite Spreizstege vorgesehen sein können) fördern eine präzise Zentrierung eines Befestigungselements (insbesondere einer Schraube). Eine Sollbruchstelle im Inneren des Dübelkopfes ermöglicht ein leichtes Durchdringen der geschlossenen Dübelspitze am Kopf durch das Befestigungselement (insbesondere einer Schraube). Eine Mitdrehsicherung am Dübelfuß kann mit Vorteil aus einem harten Kunststoff ausgebildet werden, damit sich die Mitdrehsicherung in den Untergrund einschneiden kann. Rippen, welche ein Gewinde am Dübelkopf bilden können, können abgeschrägt ausgeführt werden. Dann können diese Rippen beim Spreizen des Dübels den äußeren Bereich der Dübelhülse dehnen, wodurch das Befestigungselement (insbesondere eine Schraube) leicht einzubringen (insbesondere einzuschrauben) ist.

Mit Vorteil kann gemäß exemplarischen Ausführungsbeispielen der Erfindung annähernd eine gesamte Dübelhülse ohne Verluste (herkömmlich verursacht durch Zwischenräume zwischen funktionalen Spreizstegen) für eine Spreizwirkung ausgenutzt werden. Ferner können durch den Einsatz von Spreizstegen aus hartem Kunststoff mit dünnen Bereichen zur Implementierung von Flexibilität hohe Auszugskräfte erreicht werden. Hohe Auszugskräfte können auch durch ein Verknoten von breiteren weichen Spreizstegen gefördert werden. Des Weiteren kann eine Volumenvergrößerung eines resultierenden Knotens durch Verschiebeelemente mit entsprechender Winkelstellung (vorteilhaft 45°) erreicht werden.

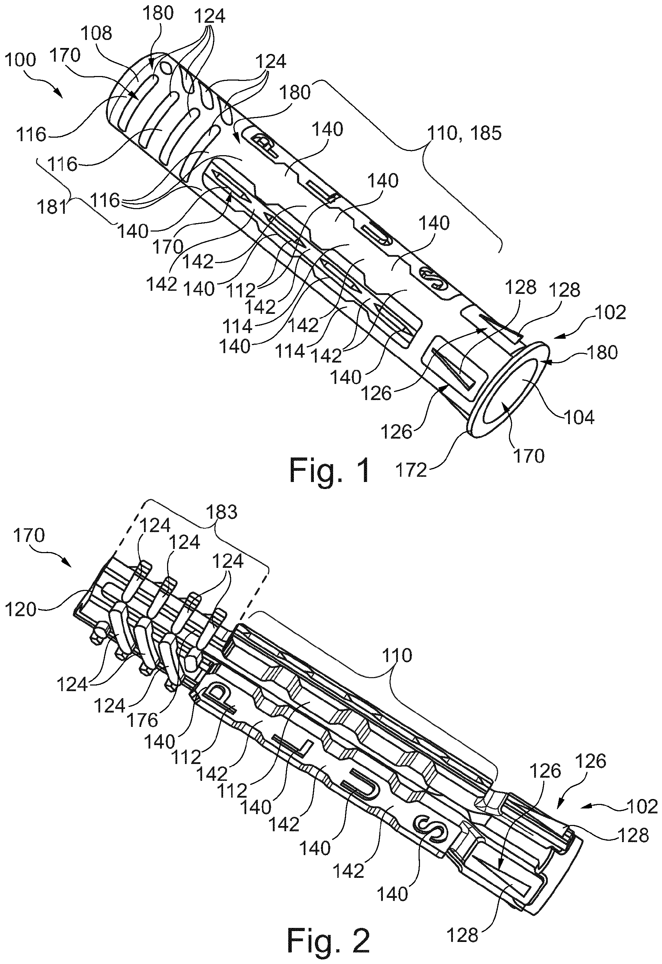

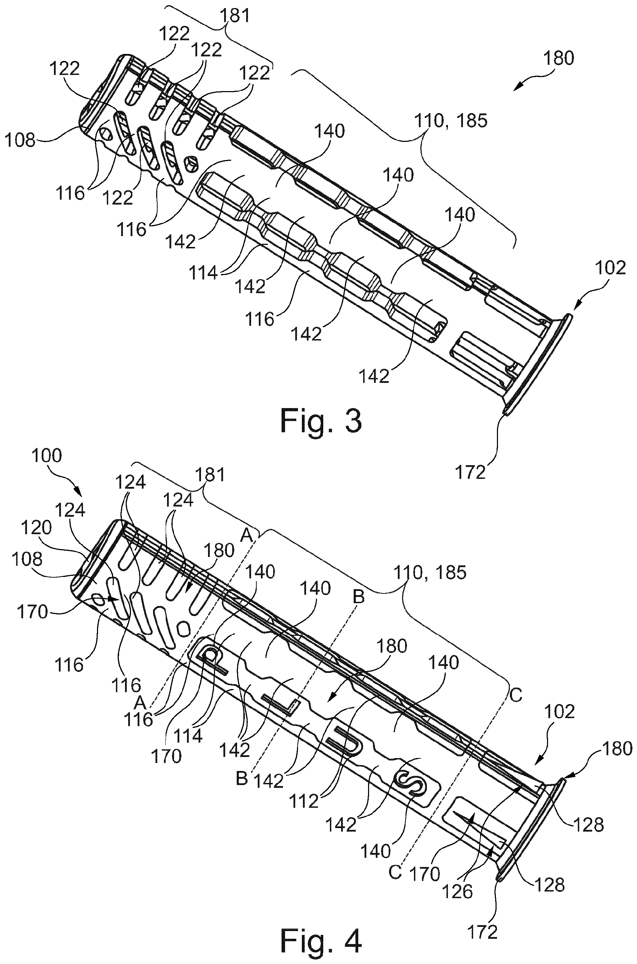

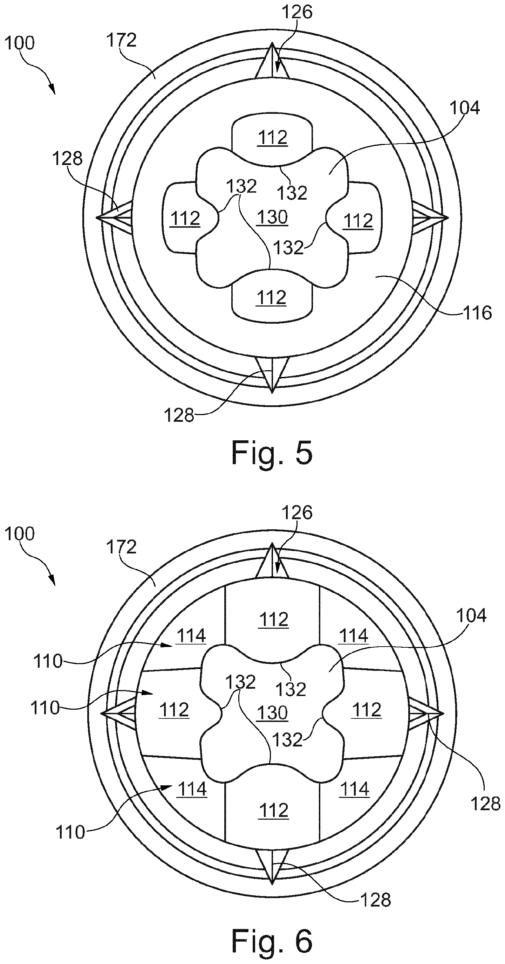

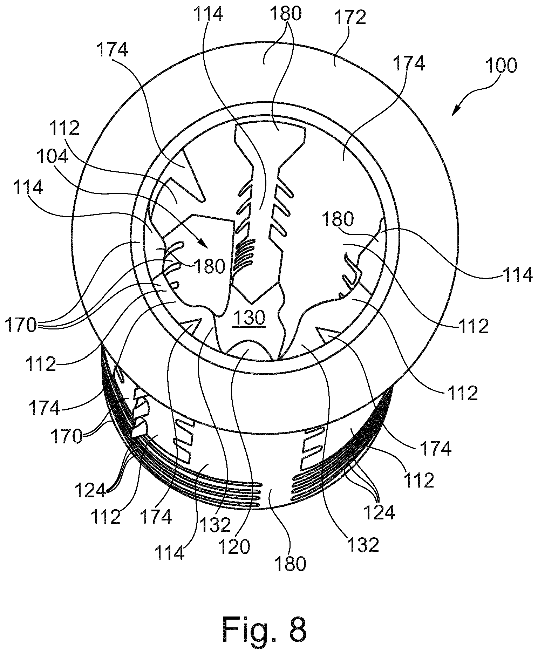

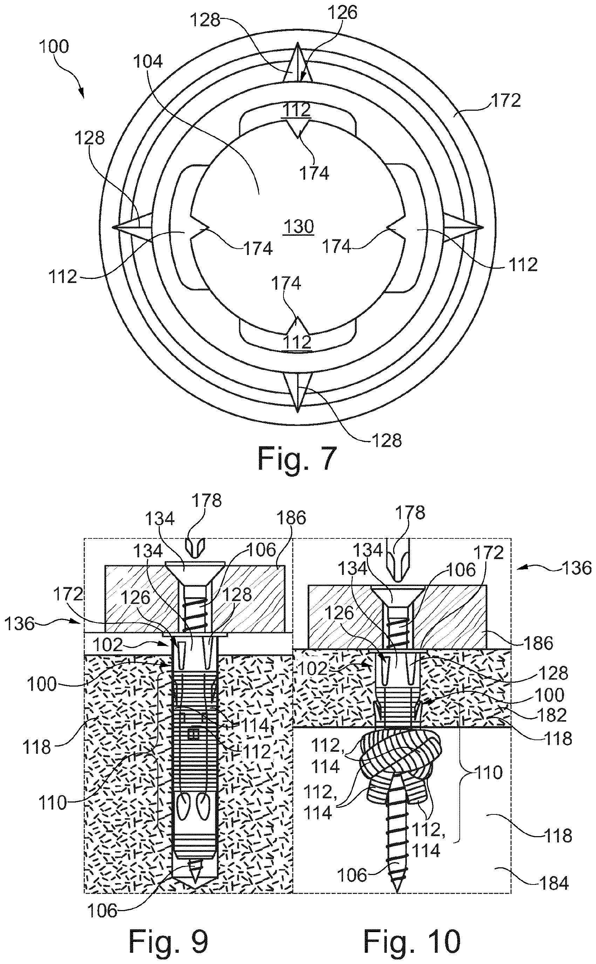

**Figur 1** zeigt eine dreidimensionale Ansicht eines Dübels 100 gemäß einem exemplarischen Ausführungsbeispiel der Erfindung, der aus zwei Spritzgusskomponenten 170, 180 entsprechend zweier getrennter Spritzgussverfahren aufgebaut ist. **Figur 2** zeigt eine erste Spritzgusskomponente 170 des Dübels 100 gemäß Figur 1 ohne die zweite Spritzgusskomponente 180. **Figur 3** zeigt die zweite Spritzgusskomponente 180 des Dübels 100 gemäß Figur 1 ohne die erste Spritzgusskomponente 170. **Figur 4** zeigt eine Seitenansicht des gesamten Dübels 100 gemäß Figur 1, d.h. mit beiden Spritzgusskomponenten 170, 180. **Figur 5** zeigt eine Schnittansicht des Dübels 100 gemäß Figur 1 bis Figur 4 entlang einer in Figur 4 dargestellten Schnittebene A-A. **Figur 6** zeigt eine Schnittansicht des Dübels 100 gemäß Figur 1 bis Figur 4 entlang einer in Figur 4 dargestellten Schnittebene B-B. **Figur 7** zeigt eine Schnittansicht des Dübels 100 gemäß Figur 1 bis Figur 4 entlang einer in Figur 4 dargestellten Schnittebene C-C. **Figur 8** zeigt eine räumliche Ansicht in ein Inneres des Dübels 100 gemäß Figur 1 bis Figur 7.

Der in Figur 1 bis Figur 8 dargestellte Dübel 100 ist als Kunststoffdübel ausgebildet, d.h. besteht ausschließlich aus Kunststoff. Kunststoffe der ersten Spritzgusskomponente 170 und der zweiten Spritzgusskomponente 180 können identisch oder unterschiedlich sein.

Der Dübel 100 weist als ersten Endabschnitt einen Fuß 102 mit einem außenseitigen ringförmigen Kragen 172 und einer Öffnung 104 zum Einführen eines vorzugsweise als Schraube ausgebildeten und in Figur 9 und Figur 10 dargestellten Befestigungselements 106 auf. Die Öffnung 104 an der Außenseite des Dübels 100 im Bereich des Fußes 102 mündet im Inneren des Dübels 100 in einen Aufnahmekanal 130 zum Aufnehmen des Befestigungselements 106 (vergleiche Figur 5 bis Figur 8). An seiner Außenseite hat der Fuß 102 eine Mitdrehsicherung 126 zum Vermeiden eines Mitdrehens des Dübels 100 bei einem drehenden Einbringen eines als Schraube ausgebildeten Befestigungselements 106 in die Öffnung 104 und nachfolgend in den Aufnahmekanal 130. Die Mitdrehsicherung 126 ist in dem dargestellten Ausführungsbeispiel durch vier in Umfangsrichtung außenseitig verteilt angeordnete und radial über eine Mantelfläche des Dübels 100 überstehende Dorne 128 (zum Beispiel aus Hartkunststoff) mit scharfen Schneidkanten ausgebildet. Diese Schneidkanten können sich nach Einführen des Dübels 100 in ein Bohrloch (oder dergleichen) in einem Untergrund 118 (siehe Figur 9 und Figur 10) in den Untergrund 118 eingraben und dadurch einen Verdrehschutz bewerkstelligen.

Ferner weist der Dübel 100 als zweiten Endabschnitt, der dem Fuß 102 gegenüberliegt, einen kappenförmigen Kopf 108 am Einsteckende des Dübels 100 auf. Der kappenförmige und daher an sich geschlossene Kopf 108 weist in einer distalen Stirnplatte eine Sollbruchstelle 120 in Form einer linienhaften und im dargestellten Ausführungsbeispiel kreuzförmig ausgebildeten mechanischen Schwächungslinie auf. Bei Einbringen eines Befestigungselements 106, insbesondere bei Einschrauben einer Schraube, in die Öffnung 104 bzw. den zugehörigen Aufnahmekanal 130 des Dübels 100 wird die Sollbruchstelle 120 von der Spitze des Befestigungselements 106 unter Öffnung der Stirnfläche des Kopfes 108 aufgebrochen. Anders ausgedrückt kann ein Ende des Befestigungselements 106 die Sollbruchstelle 120 definiert zerstören und dadurch durch den Kopf 108 des Dübels 100 hindurchtreten (vergleiche Figur 9 und Figur 10).

Ferner weist der Kopf 108 in einem hohlzylindrischen Abschnitt Dehnungsfugen 122 auf (siehe Figur 3), die mit Rippen 124 gefüllt sind (siehe Figur 1 und Figur 2). Die Rippen 124 sind aus demselben Material und in demselben Herstellungsverfahren ausgebildet wie erste Spreizstege 112. Ein Teil der Rippen 124 erstreckt sich orthogonal zu der Axialrichtung des Dübels 100. Ein anderer Teil der Rippen 124 in den Dehnungsfugen 122 verläuft in einem spitzen Winkel schräg zu der Axialrichtung des Dübels 100.

Darüber hinaus ist ein Spreizbereich 110 zwischen dem Fuß 102 und dem Kopf 108 angeordnet und mit einer Mehrzahl von in Umfangsrichtung bündig bzw. unmittelbar aneinander anliegenden, aber getrennten Spreizstegen 112, 114 versehen. Der Spreizbereich 110 ist jener Bereich des Dübels 100, der nach Einbringen des Dübels 100 in einen als Vollkörper ausgebildeten Untergrund 118 (siehe Figur 9) und nach Einbringen eines als Schraube ausgebildeten Befestigungselements 106 (siehe ebenfalls Figur 9) in die Öffnung 104 radial aufgeweitet wird und dabei aufspreizt. Hingegen erfährt weder der Fuß 102 noch der Kopf 108 bei der Montage des Dübels 100 samt Befestigungselement 106 eine Spreizung. Eine gewisse Spreizung am Kopf 108 des Dübels 100 entsteht durch das Einbringen des Befestigungselements 106, insbesondere einer Schraube.

Erste Spreizstege 112 der ersten Spritzgusskomponente 170 sind, wie in Figur 1 und Figur 2 dargestellt, zwar kopfseitig und fußseitig miteinander verbunden, sind jedoch nicht mit zweiten Spreizstegen 114 der zweiten Spritzgusskomponente 180 verbunden. Die zweiten Spreizstege 114 sind sowohl am Fuß 102 als auch am Kopf 108 miteinander verbunden und sind einstückig und einstoffig mit bzw. als Teil einer zusammenhängenden Matrix 116 ausgebildet, wie in Figur 1 und Figur 3 dargestellt.

Die ersten Spreizstege 112 und die zweiten Spreizstege 114 können wahlweise aus unterschiedlichen Materialien oder aus dem gleichen Material hergestellt sein, wobei diese Materialien in zwei getrennten und aufeinanderfolgenden Spritzgussverfahren zum Einsatz kommen. Im dargestellten Ausführungsbeispiel sind die ersten Spreizstege 112 flexibler ausgebildet als die zweiten Spreizstege 114. Anders ausgedrückt sind die zweiten Spreizstege 114 im Vergleich zu den ersten Spreizstegen 112 rigider ausgebildet. Zum Beispiel können die zweiten Spreizstege 114 aus einem Hartkunststoff oder einem faserverstärkten Kunststoff hergestellt sein. Die ersten Spreizstege 112 hingegen können aus einem Weichkunststoff hergestellt sein, zum Beispiel Polyethylen. Alternativ können aber auch die ersten Spreizstege 112 aus einem härteren bzw. weniger elastischen Material hergestellt sein als die zweiten Spreizstege 114 der Matrix 116.

Wie in Figur 1 und Figur 6 zu erkennen, sind die ersten Spreizstege 112 und die zweiten Spreizstege 114 in Umfangsrichtung alternierend angeordnet. Im dargestellten Ausführungsbeispiel gibt es vier erste Spreizstege 112 und vier zweite Spreizstege 114, wobei eine andere Anzahl erster Spreizstege 112 bzw. zweiter Spreizstege 114 möglich ist. Die ersten Spreizstege 112 und die zweiten Spreizstege 114 sind zueinander mit Berührkontakt und formschlüssig ausgebildet, aber bilden voneinander getrennte Körper, die auch getrennt voneinander aufspreizen können. Zum Beispiel Figur 6 kann entnommen werden, dass der Spreizbereich 110 in Umfangsrichtung spaltfrei geschlossen ist. Dies wird erreicht, indem jeweils benachbarte erste Spreizstege 112 und zweite Spreizstege 114 aneinander mit physischem Kontakt anliegen, ohne dazwischen Zwischenräume oder Schlitze zu bilden. Anschaulich ist mittels Spritzgießens eine zusammenhängende Matrix 116 gebildet, welche auch die zweiten Spreizstege 114 enthält. Die ersten Spreizstege 112 bilden nicht Teil der Matrix 116, sind aber abschnittsweise in Aussparungen der Matrix 116 positioniert.

Figur 1 und Figur 4 kann entnommen werden, dass die ersten Spreizstege 112 und die zweiten Spreizstege 114 miteinander verzahnt sind. Zueinander invers geformte Zahnstrukturen der Spreizstege 112, 114 sind derart konfiguriert, dass in Axialrichtung (die einer Einführrichtung eines Befestigungselements 106 in die Öffnung 104 des Dübels 100 entspricht und senkrecht zu einer Papierebene gemäß Figur 5 bis Figur 7 verläuft) des Dübels 100 abwechselnd breitere Abschnitte 140 und schmälere Abschnitte 142 gebildet sind. Dies ist zum Beispiel in Figur 4 zu erkennen.

Im Spreizbereich 110 und gegebenenfalls im Kopf 108, vorzugsweise jedoch nicht im Bereich des Fußes 102, ist ein hohler und sich an die Öffnung 104 anschließender Aufnahmekanal 130 zum Aufnehmen eines Befestigungselements 106 im Inneren des Dübels 100 ausgebildet. Wie am besten in Figur 6 dargestellt, hat der Aufnahmekanal 130 mehrere innenseitig hineinragende Überstände 132, die als innenseitige Endbereiche der ersten Spreizstege 112 ausgebildet sind. Wird das Befestigungselement 106 in die Öffnung 104 und nachfolgend den Aufnahmekanal 130 eingeführt, drückt das Befestigungselement 106 die Überstände 132 radial nach außen, wodurch die ersten Spreizstege 112 und dann auch die zweiten Spreizstege 114 nach außen auf eine Bohrlochwandung in dem Untergrund 118 aufgespreizt und aufgepresst werden.

Figur 2 zeigt anschaulich das Ergebnis des ersten Spritzgussprozesses, mit dem die erste Spritzgusskomponente 170 gefertigt wird. In Figur 2 ist zu erkennen, dass die vier ersten Spreizstege 112 am Kopf 108 und am Fuß 112 miteinander verbunden sind. Eine Verbindungsstruktur 176 dient als Füllmaterial bei einer Verwendung des Dübels 100 als Vollbaustoffeinsatz und bildet teilweise einen Rand bzw. eine Unterlage für einen nachfolgenden zweiten Spritzgussprozess.

Figur 3 stellt die zweite Spritzgusskomponente 180 als Ergebnis des zweiten Spritzgussprozesses isoliert dar, d.h. ohne Darstellung der ersten Spritzgusskomponente 170. Die vier zweiten Spreizstege 114 sind ebenfalls am Kopf 108 und am Fuß 112 miteinander verbunden, nicht aber mit den ersten Spreizstegen 112. Figur 3 zeigt die Dehnungsfugen 122, die sowohl ein radiales Aufspreizen fördern als auch ein leichteres Einbringen einer Schraube als Befestigungselement 106 ermöglichen. Ein Teil dieser Dehnungsfugen 122 ist schräg zu einer Axialrichtung des Dübels 100 ausgerichtet, was eine Aufweitung im Durchmesser ermöglicht. Entsprechende Stege können beim Einschrauben in axialer Richtung geformt werden.

Der in Figur 4 dargestellte fertige Dübel 100 enthält die ersten Spreizstege 112 als Teil der ersten Spritzgusskomponente 170 und die zweiten Spreizstege 114 als Teil der anderen zweiten Spritzgusskomponente 180. Zwischen den ersten Spreizstegen 112 und den zweiten Spreizstegen 114 ist keine mechanische Verbindung gebildet.

Zum Herstellen des Dübels 100 kann zunächst die erste Spritzgusskomponente 170 gemäß Figur 2 durch ein erstes Spritzgussverfahren unter Verwendung eines ersten Spritzgusswerkzeugs hergestellt werden. Dabei werden auch die ersten Spreizstege 112 gebildet. Nachfolgend kann die zweite Spritzgusskomponente 180 gemäß Figur 3 durch einen zweites Spritzgussverfahren unter Verwendung eines zweiten Spritzgusswerkzeugs hergestellt werden, wodurch auch die zweiten Spreizstege 114 gebildet werden. Hierbei kann die erste Spritzgusskomponente 170 durch die zweite Spritzgusskomponente 180 überspritzt werden. Als Ergebnis werden die Spreizstege 112, 114 enthalten, die zwar mit Berührkontakt aneinander anliegen, aber getrennte Körper sind, die bei Einbringen eines Befestigungselements 106 in den Dübel 100 auch getrennt voneinander aufspreizen können.

In Figur 7 und in Figur 8 zu erkennen sind Spreizdorne 174 an den ersten Spreizstegen 112. Die Spreizdorne 174 erstrecken sich in die Öffnung 104 bzw. bis in den Aufnahmekanal 130 hinein.

In Figur 1 bis Figur 4 bezeichnet Bezugszeichen 181 einen Hülsenabschnitt der Matrix 116, Bezugszeichen 183 einen kopfseitigen Endabschnitt der ersten Spreizstege 112 und Bezugszeichen 185 einen im Wesentlichen kreiszylindrischen Abschnitt des Dübels 100 (auch als hohlzylindrischer Dübelabschnitt bezeichnet).

**Figur 9** zeigt schematisch einen Dübel 100 gemäß einem exemplarischen Ausführungsbeispiel der Erfindung (zum Beispiel den in Figur 1 bis Figur 8 gezeigten Dübel 100), bei dem die Spreizstege 112, 114 in einem als Vollkörper ausgebildeten Untergrund 118 aufgespreizt sind.

Genauer gesagt stellt Figur 9 eine Montageanordnung 136 gemäß einem exemplarischen Ausführungsbeispiel der Erfindung dar, die einen als Vollkörper (zum Beispiel Vollbeton) ausgebildeten Untergrund 118 und ein Montagekit 134 gemäß einem exemplarischen Ausführungsbeispiel der Erfindung zeigen. Das Montagekit 134 enthält den bezugnehmend auf Figur 1 bis Figur 8 beschriebenen Dübel 100 und eine Metallschraube als Befestigungselement 106 zum Einführen in den Dübel 100.

Zum Montieren des Dübels 100 in dem als Vollkörper ausgebildeten Untergrund 118 wird in dem Untergrund 118 zunächst ein Sackloch gebohrt. Danach wird, beispielsweise händisch oder mittels eines nicht dargestellten Hammers, der Dübel 100 in das Sackloch eingeführt. Nachfolgend wird mittels eines Schraubendrehers 178 das als Schraube ausgebildete Befestigungselement 106 in die Öffnung 104 und dann in den Aufnahmekanal 130 eingeschraubt. Dadurch erfolgt ein vollumfängliches und in Umfangsrichtung lückenloses Aufspreizen der Spreizstege 112, 114 des Dübels 100 gegen die Wandung des Sacklochs. Wie oben beschrieben, sind die Spreizstege 112, 114 ausgebildet, bei Einführen des Befestigungselements 106 in den als Vollkörper ausgebildeten Untergrund 118 gemeinsam aufzuspreizen.

Durch das oben beschriebene Herstellungsverfahren bzw. die Eigenschaften des Dübels 100 verbleiben im Spreizbereich 110 keine Hohlräume ohne Kunststoff zwischen Befestigungselement 106 und der Wandung des Sacklochs. Da sich solche Hohlräume auf das Spreizverhalten negativ auswirken, können mit dem beschriebenen Dübel 100 und dem zugehörigen Setzverfahren hohe Auszugskräfte erhalten werden.

Gemäß Figur 9 werden der Dübel 100 und das Befestigungselement 106 verwendet, um ein Anbauteil 186 an dem Untergrund 118 zu montieren.

**Figur 10** zeigt denselben Dübel 100 wie gemäß Figur 9 in einem Betriebszustand, in dem die Spreizstege 112, 114 in einem als Hohlkörper ausgebildeten anderen Untergrund 118 verknotet sind. Wenn nämlich der Untergrund 118, in den der Dübel 100 gesetzt wird, ein Hohlkörper ist, verknoten die Spreizstege 112, 114 des Dübels 100 in einem Hohlraum 184 des Hohlkörpers. Im dargestellten Ausführungsbeispiel ist der Untergrund 118 aus einer Platte 182 (zum Beispiel aus Gips oder Holz) gebildet, hinter der ein Hohlraum 184 angeordnet ist.

Somit ist der Dübel 100 ausgebildet, bei Eindrehen des Befestigungselements 106 in den als Hohlkörper ausgebildeten Untergrund 118 die Spreizstege 112, 114 des eingeführten Dübel 100 miteinander zu verknoten, wenn die Spreizstege 112, 114 in den Hohlraum 184 hinter der Platte 182 eindringen.

Der als Kunststoffdübel ausgebildete Dübel 100 gemäß Figur 1 bis Figur 8 ermöglicht somit wahlweise eine Verankerung durch Verspreizen in Vollbaustoffen (siehe Figur 9) und durch Verknoten in Hohlbaustoffen oder Plattenmaterialien (siehe Figur 10). Gleichzeitig gilt, dass harte und/oder steife Kunststoffe besonders gut für ein Verspreizen dienen und weiche und/oder elastische Kunststoffe besonders wirksam ein Verknoten fördern. Dicke Spreizstege 112 bzw. 114 mit großer Anlagefläche sind optimal für Vollbaustoffe. Hingegen sind dünne Spreizelemente 112 bzw. 114 besonders gut zum leichten Verknoten in Hohlbaustoffen geeignet.

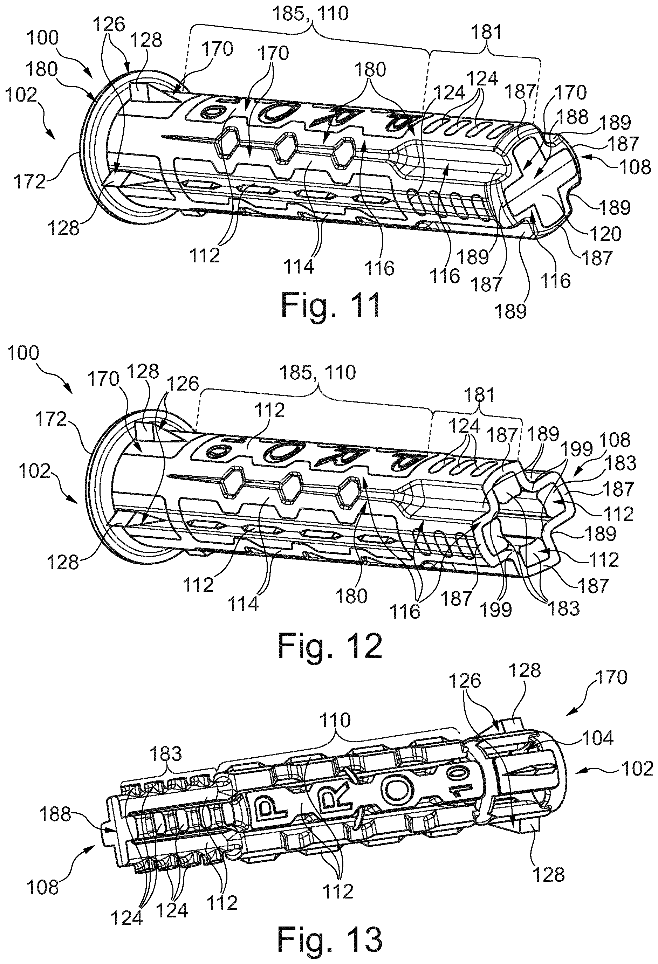

**Figur 11** zeigt eine räumliche Seitenansicht eines Dübels 100 gemäß einem anderen Ausführungsbeispiel der Erfindung mit elastischer manschettenförmiger Matrix 116. **Figur 12** zeigt eine Schnittansicht des Dübels 100 gemäß Figur 11, bei der ein dübelkopfseitiges Ende des Dübels 100 gemäß Figur 11 abgeschnitten ist.

Der Dübel 100 gemäß Figur 11 und Figur 12 ist als Kunststoffdübel ausgebildet und aus einer ersten Komponente 170 eines ersten Kunststoffmaterials und einer zweiten Komponente 180 eines anderen zweiten Kunststoffmaterials gebildet. Bei dem Ausführungsbeispiel gemäß Figur 11 bilden die erste Komponente 170 und die zweite Komponente 180 eine vollumfänglich und endseitig geschlossene Dübelhülse. Die erste Komponente 170 ist gemäß Figur 11 und Figur 12 als erste Spritzgusskomponente ausgebildet. Die zweite Komponente 180 ist gemäß Figur 11 und Figur 12 als zweite Spritzgusskomponente ausgebildet, welche auf die erste Spritzgusskomponente aufgespritzt ist. Die zweite Komponente 180 bedeckt die erste Komponente 170 teilweise, sodass die erste Komponente 170 von der zweiten Komponente 180 teilweise überspritzt ist. Bei einem entsprechenden Herstellungsverfahren kann zunächst in einem ersten Spritzgusswerkzeug mit einem ersten Kunststoffmaterial die erste Komponente 170 gebildet werden. Die so hergestellte erste Komponente 170 kann dann in ein zweites Spritzgusswerkzeug eingeführt werden und mit einem anderen zweiten Kunststoffmaterial überspritzt werden, wodurch die zweite Komponente 180 gebildet ist.

Die erste Komponente 170 ist mit einer Mehrzahl von in Umfangsrichtung angeordneten harten ersten Spreizstegen 112 ausgebildet. Die erste Komponente 170 ist aus einem Material einer größeren Festigkeit oder Härte ausgebildet als das Material der zweiten Komponente 180. Das Material der zweiten Komponente 180 hat ein niedrigeres Elastizitätsmodul als das Material der ersten Komponente 170 und zeigt daher ausgeprägtere elastische Eigenschaften. Die mit der härteren ersten Komponente 170 verbundene weichere zweite Komponente 180 ist mit einer dehnbaren zusammenhängenden Matrix 116 gebildet, die unter Krafteinwirkung elastisch gedehnt werden kann. Die Matrix 116 umgibt kopfseitige Enden der erste Spreizstege 112 außenseitig entlang einer Mantelfläche. Die die ersten Spreizstege 112 umgebende Mantelfläche der Matrix 116 ist optional durch Dehnungsfugen 122 unterbrochen, die gemäß Figur 11 und Figur 12 mit Rippen 124 der ersten Komponente 170 ausgefüllt sind. Gemäß Figur 11 und Figur 12 bildet die Matrix 116 eine am Kopf 108 stirnseitig offene elastisch dehnbare Manschette bzw. Hülse. Dehnelemente der Matrix 116 befinden sich insbesondere in Bereichen, die in Figur 12 mit Bezugszeichen 199 gekennzeichnet sind. Ein sich an die Manschette axial anschließender anderer Bereich der Matrix 116 bildet zweite Spreizstege 114.

Die besagte Manschette bzw. Hülse der Matrix 116 erstreckt sich entlang eines Hülsenabschnitts 181 der Matrix 116. Im Bereich ihres Hülsenabschnitts 181 ist die Matrix 116 teilweise (in Figur 11 und Figur 12 dargestellt) oder vollständig (nicht dargestellt) umfänglich geschlossen. In dem Hülsenabschnitt 181 sind (im Detail in Figur 13 dargestellte) kopfseitige Endabschnitte 183 der ersten Spreizstege 112 von der Matrix 116 radial nach außen hin überdeckt, vergleiche Figur 12.

Die Matrix 116 ist an einer kopfseitigen Stirnfläche 188 des Dübels 100 offen. An der Stirnfläche 188 kann eine dünne Haut der ersten Komponente 170 als Sollbruchstelle 120 zum Durchstoßen durch ein Befestigungselement 106 gebildet sein, vergleiche Figur 11. Diese dünne Haut kann die zweiten Spreizstege 112 stirnseitig bedecken. In der Schnittdarstellung gemäß Figur 12 ist die dünne Haut nicht dargestellt, sodass in dieser Darstellung an der kopfseitigen Stirnfläche 188 die Stirnflächen der Endabschnitte 183 der ersten Spreizstege 112 erkennbar sind. In einem anderen Ausführungsbeispiel (nicht gezeigt) kann die dünne Haut auch weggelassen werden, sodass der entsprechende Dübel 100 am Ende des Kopfs 108 dann so aussieht wie in Figur 12 gezeigt. Durch beide Konfigurationen (mit oder ohne Haut) ist es ermöglicht, dass ein (selbst sehr langes) Befestigungselement 106 durch die Stirnfläche 188 am Kopf 108 des Dübels 100 hindurchtreten kann, ohne dass der durch die elastisch dehnbare Matrix 116 mantelflächenseitig bewirkte Zusammenhalt der ersten Spreizstege 112 dadurch beeinträchtigt wird. Somit ist die dehnbare zusammenhängende Matrix 116 ausgebildet, bei Einführen eines Befestigungselements 106 in eine Öffnung 104 des Dübels 100 die ersten Spreizstege 112 endseitig zusammenzuhalten, während im Spreizbereich 110 eine Spreizung der Spreizstege 112, 114 ermöglicht ist.

Wie in Figur 11 und Figur 12 ebenfalls dargestellt, weist die Matrix 116 eine Mehrzahl von in Umfangsrichtung angeordnete zweite Spreizstege 114 auf, die sich als axiale Fortsätze ausgehend von der Manschette bzw. Hülse in Richtung zu dem Fuß 102 des Dübels 100 erstrecken. Die zweiten Spreizstege 114 erstrecken sich parallel zu den ersten Spreizstegen 112. In Umfangsrichtung des Dübels 100 ist somit eine alternierende Sequenz der ersten Spreizstege 112 und der zweiten Spreizstege 114 gebildet.

Die ersten Spreizstege 112 und die zweiten Spreizstege 114 sind voneinander getrennt und können daher auch getrennt aufspreizen. Entweder liegen die ersten Spreizstege 112 und die zweiten Spreizstege 114 in Umfangsrichtung bündig aneinander an, oder die zweiten Spreizstege 114 überdecken die ersten Spreizstege 112 leicht entlang ihrer Seitenränder. Jedoch bleibt zumindest ein zentraler Bereich der ersten Spreizstege 112 gegenüber den zweiten Spreizstegen 114 freigelegt, wie in Figur 11 und Figur 12 dargestellt.

Gemäß Figur 11 und Figur 12 hat der Hülsenabschnitt 181 außenseitig einen im Wesentlichen kreuzförmigen Querschnitt. Ein hohlzylindrischer Dübelabschnitt 185 zwischen Fuß 102 und Hülsenabschnitt 181 hat hingegen einen im wesentlichen kreisförmigen Querschnitt. Die Matrix 116 hat in einem kraftfreien Zustand (d.h. vor Einführung des Dübels 100 in ein Bohrloch eines Untergrunds 118 und vor Einführen eines Befestigungselements 106 in eine Öffnung 104 des Dübels 100) des Dübels 100 in dem Hülsenabschnitt 181 eine geringere Querschnittsfläche als der Dübelabschnitt 185. Gleichzeitig hat die Matrix 116 in dem kraftfreien Zustand in dem Hülsenabschnitt 181 einen größeren Umfang als der hohlzylindrische Dübelabschnitt 185. Entsprechend dieser Formgebung ist die Matrix 116 in dem kraftfreien Zustand in dem Hülsenabschnitt 181 mit einer Mehrzahl von in Umfangsrichtung angeordneten Einbuchtungen 189 versehen. Im dargestellten Ausführungsbeispiel sind vier Einbuchtungen 189 gebildet, die in Umfangsrichtung mit dazwischen angeordneten Ausbuchtungen 187 alternieren. Jede der Ausbuchtungen 187 korrespondiert zu einem der ersten Spreizstege 112. Die zwischen den Ausbuchtungen 187 angeordneten Einbuchtungen 189 verbessern die Dehnfähigkeit der Matrix 116, indem sie bei Eindringen einer Schraube radial nach außen geklappt oder gedrückt werden und so zum einen Raum für die Schraube schaffen und zum anderen die Spreizstege der anderen Komponente zusammenhalten.

In Figur 11 ist gut zu erkennen, wie jede der Einbuchtungen 189 in axialer Richtung mit einem jeweiligen der zweiten Spreizstege 114 fluchtet bzw. dazu ausgerichtet ist. Jede der Ausbuchtungen 187 geht in axialer Richtung im wesentlichen stufenfrei bzw. kontinuierlich in einen jeweiligen der freiliegenden Abschnitte eines jeweiligen ersten Spreizstegs 112 über, siehe ebenfalls Figur 11.

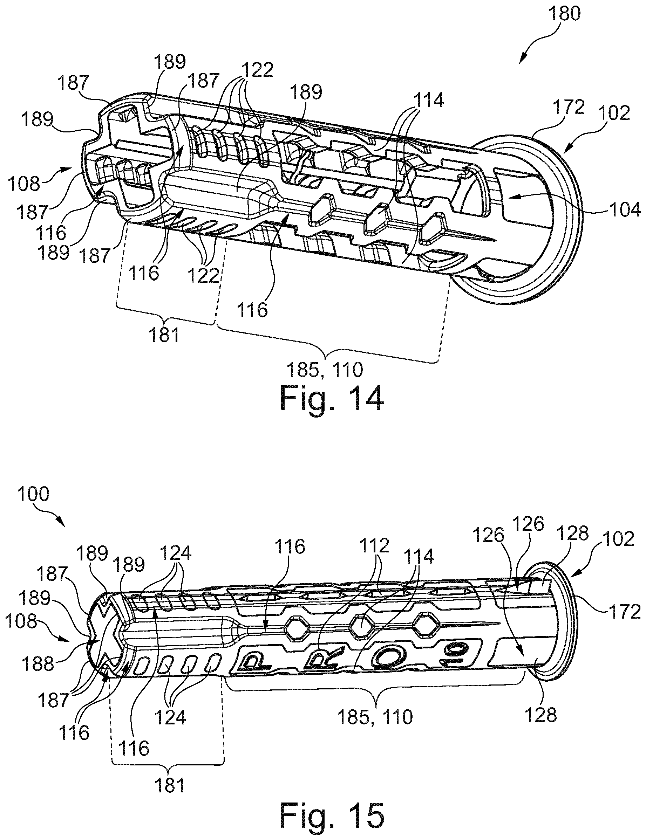

**Figur 13** zeigt eine dreidimensionale Ansicht einer ersten Spritzgusskomponente 170 eines Dübels 100 gemäß einem exemplarischen Ausführungsbeispiel der Erfindung. **Figur 14** zeigt eine dreidimensionale Ansicht einer zweiten Spritzgusskomponente 180 dieses Dübels 100. **Figur 15** zeigt eine dreidimensionale Ansicht des Dübels 100 mit elastischer manschettenförmiger Matrix 116, der aus der in Figur 13 dargestellten ersten Spritzgusskomponente 170 und der in Figur 14 dargestellten zweiten Spritzgusskomponente 180 gebildet ist. Die erste Spritzgusskomponente 170 mit den harten ersten Spreizstegen 112 kann aus einem harten Kunststoffmaterial hergestellt werden. Ein anderes Kunststoffmaterial der zweiten Spritzgusskomponente 180 mit der elastisch dehnbaren Matrix 116 kann ein elastisch deformierbares Kunststoffmaterial sein.

**Tabelle 1: Vergleich eines Dübeldurchmessers eines jeweiligen Dübels mit Bereichen von Durchmessern zugehöriger Schrauben, die mit einem Dübel mit festem Durchmesser verwendet werden können**

| Durchmesser Dübel [mm] | Durchmesser Schraube [mm] |
|---|---|
| 5 | 3-4 |
| 6 | 4-5 |
| 8 | 4,5-6 |
| 10 | 6-8 |
| 12 | 8-10 |
| 14 | 10-12 |

Wie oben beschrieben, kann gemäß einem exemplarischen Ausführungsbeispiel ein Dübel 100 wahlweise mit einem Befestigungselement 106 eines ersten Durchmessers oder mit mindestens einem weiteren Befestigungselemente 106 eines von dem ersten Durchmesser unterschiedlichen zweiten Durchmessers eingesetzt werden. Tabelle 1 stellt für unterschiedliche Dübel 100 entsprechend unterschiedlicher Ausführungsbeispiele dar, in welchem Bereich Durchmesser von mit diesem Dübel 100 verwendbaren Befestigungselementen 106, 106 liegen können. Tabelle 1 zeigt also, dass für ein und denselben Dübel ein Unterschied zwischen dem Durchmesser eines Befestigungselements 106 und dem Durchmesser des zumindest einen weiteren Befestigungselements 106 mindestens 1 mm, insbesondere mindestens 1,5 mm oder sogar mehr, betragen kann.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Dübel (100), aufweisend:
eine erste Komponente (170) mit einer Mehrzahl von in Umfangsrichtung angeordneten ersten Spreizstegen (112); und
eine mit der ersten Komponente (170) verbundene zweite Komponente (180) mit einer dehnbaren zusammenhängenden Matrix (116), welche Matrix (116) die ersten Spreizstege (112) zumindest abschnittsweise, insbesondere dübelkopfseitig, umfänglich umgibt;
wobei die Matrix (116) in einem kraftfreien Zustand in einem Hülsenabschnitt (181) einen größeren Umfang aufweist als ein hohlzylindrischer Dübelabschnitt (185) oder Spreizbereich (110) zwischen einem Fuß (102) des Dübels (100) und dem Hülsenabschnitt (181);
wobei die Matrix (116) in dem kraftfreien Zustand in dem Hülsenabschnitt (181) mindestens eine Einbuchtung (189) und mindestens eine Ausbuchtung (187) aufweist, die in einer Umfangsrichtung des Dübels (100) alternierend angeordnet sind, wobei die mindestens eine Ausbuchtung (187) zu einem der ersten Spreizstege (112) korrespondiert;
wobei die mindestens eine Einbuchtung (189) dazu konfiguriert ist, bei Einführen eines Befestigungselements (106) in eine Öffnung (104) des Dübels (100) radial nach außen geklappt oder gedrückt zu werden.

2. Dübel (100) gemäß Anspruch 1, aufweisend zumindest eines der folgenden Merkmale:
wobei ein Unterschied zwischen dem größeren Umfang in dem Hülsenabschnitt (181) und einem kleineren Umfang in dem hohlzylindrischen Dübelabschnitt (185) oder Spreizbereich (110) mindestens 1 mm, insbesondere mindestens 2 mm, beträgt;
wobei die Matrix (116) einen Kappenbereich oder Manschettenbereich eines Kopfs (108) des Dübels (100) bildet, und insbesondere dübelkopfseitige Endabschnitte (183) der ersten Spreizstege (112) mantelflächenseitig und/oder stirnseitig umgibt.

3. Dübel (100) gemäß Anspruch 1 oder 2, wobei die Matrix (116) eine Mehrzahl von in Umfangsrichtung angeordnete zweite Spreizstege (114) aufweist, die sich insbesondere ausgehend von einem Kappenbereich oder Manschettenbereich der Matrix (116) axial in Richtung eines Fußes (102) des Dübels (100) erstrecken, wobei insbesondere die ersten Spreizstege (112) und die zweiten Spreizstege (114) in Umfangsrichtung, insbesondere bündig, aneinander anliegen, aber voneinander getrennt sind.

4. Dübel (100) gemäß einem der Ansprüche 1 bis 3, wobei die Matrix (116) entlang des Hülsenabschnitts (181) ihrer axialen Erstreckung ganz oder teilweise umfänglich geschlossen ist, in welchem Hülsenabschnitt (181) kopfseitige Endabschnitte (183) der ersten Spreizstege (112) von der Matrix (116) nach außen hin zumindest mantelflächenseitig überdeckt sind.

5. Dübel (100) gemäß Anspruch 4, aufweisend zumindest eines der folgenden Merkmale:
wobei die Matrix (116) in dem Hülsenabschnitt (181) mindestens eine Dehnungsfuge (122) aufweist, die zumindest teilweise mit mindestens einer Rippe (124) der ersten Komponente (170) gefüllt ist, wobei insbesondere zumindest eine der mindestens einen Dehnungsfuge (122) schräg zu einer Axialrichtung des Dübels (100) verläuft;
wobei die Matrix (116) in einem kraftfreien Zustand in dem Hülsenabschnitt (181) eine geringere Querschnittsfläche aufweist als ein hohlzylindrischer Dübelabschnitt (185) oder Spreizbereich (110) zwischen einem Fuß (102) des Dübels (100) und dem Hülsenabschnitt (181);
wobei die Matrix (116) in einem kraftfreien Zustand in dem Hülsenabschnitt (181) eine Mehrzahl von in Umfangsrichtung angeordnete Einbuchtungen (189) aufweist.

6. Dübel (100) gemäß einem der Ansprüche 1 bis 5, aufweisend zumindest eines der folgenden Merkmale:
wobei die Matrix (116) an einer kopfseitigen Stirnfläche (188) des Dübels (100) offen ist, wobei insbesondere an der kopfseitigen Stirnfläche (188) die ersten Spreizstege (112) gegenüber der Matrix (116) nach außen hin freigelegt sind oder von einer freiliegenden Haut, insbesondere einer hautartigen Sollbruchstelle (120), der ersten Komponente (170) bedeckt sind;
wobei die Matrix (116) entlang eines Spreizbereichs (110) erste Teilbereiche der ersten Spreizstege (112) überdeckt und zwischen den ersten Teilbereichen angeordnete zweite Teilbereiche der ersten Spreizstege (112) freilegt;
wobei die dehnbare zusammenhängende Matrix (116) aus einem elastischen Material hergestellt ist;
wobei die dehnbare zusammenhängende Matrix (116) ausgebildet ist, bei Einführen eines Befestigungselements (106) in eine Öffnung (104) des Dübels (100), insbesondere nach Einführen des Dübels (100) in ein Bohrloch in einem als Vollkörper ausgebildeten Untergrund (118), die ersten Spreizstege (112) unter Dehnung der Matrix (116) dübelkopfseitig zusammenzuhalten;
wobei die erste Komponente (170) und die zweite Komponente (180) eine geschlossene Dübelhülse bilden;
wobei die erste Komponente (170) eine erste Spritzgusskomponente und die zweite Komponente (180) eine separate zweite Spritzgusskomponente ist, wobei insbesondere die erste Spritzgusskomponente von der zweiten Spritzgusskomponente zumindest teilweise überspritzt ist;
wobei die zweite Komponente (180) aus einem anderen Material, insbesondere aus einem Material mit geringerem Elastizitätsmodul und/oder geringerer Shore-Härte, ausgebildet ist als ein anderes Material, insbesondere ein Material mit höherem Elastizitätsmodul und/oder höherer Shore-Härte, der ersten Komponente (170);
wobei die Spreizstege (112, 114) ausgebildet sind, bei Einführen eines Befestigungselements (106) in den, in einen als Vollkörper ausgebildeten Untergrund (118) eingeführten, Dübel (100) gemeinsam aufzuspreizen;
wobei die Spreizstege (112, 114) ausgebildet sind, bei Einführen eines Befestigungselements (106) in den, in einen als Hohlkörper ausgebildeten Untergrund (118) eingeführten, Dübel (100) miteinander zu verknoten;
wobei zumindest ein Teil der Spreizstege (112, 114) in Axialrichtung des Dübels (100) alternierend breitere Abschnitte (140) und schmälere Abschnitte (142) aufweist.

7. Dübel (100) gemäß einem der Ansprüche 1 bis 6, aufweisend:
einen Fuß (102) mit einer Öffnung (104) zum Einführen eines Befestigungselements (106);
einen Kopf (108); und einen Spreizbereich (110) zwischen dem Fuß (102) und dem Kopf (108) mit den ersten Spreizstegen (112) und/oder den zweiten Spreizstegen (114),
wobei insbesondere die ersten Spreizstege (112) am Fuß (102) und/oder am Kopf (108) miteinander verbunden sind und/oder wobei die zweiten Spreizstege (114) am Fuß (102) und/oder am Kopf (108) miteinander verbunden sind.

8. Dübel (100) gemäß einem der Ansprüche 3 bis 7, aufweisend zumindest eines der folgenden Merkmale:
wobei die ersten Spreizstege (112) nicht mit den zweiten Spreizstegen (114) verbunden sind, insbesondere nicht am Kopf (108) und/oder nicht am Fuß (102) und/oder nicht zwischen Kopf (108) und Fuß (102);
wobei die ersten Spreizstege (112) und die zweiten Spreizstege (114) aus unterschiedlichen Materialien oder aus dem gleichen Material hergestellt sind;
wobei die ersten Spreizstege (112) und die zweiten Spreizstege (114) in Umfangsrichtung alternierend angeordnet sind;
wobei die ersten Spreizstege (112) und die zweiten Spreizstege (114) zueinander formschlüssig ausgebildet sind;
wobei die ersten Spreizstege (112) dünner und aus einem festeren Material als die zweiten Spreizstege (114) ausgebildet sind oder die zweiten Spreizstege (114) dünner und aus einem festeren Material als die ersten Spreizstege (112) ausgebildet sind;
wobei die ersten Spreizstege (112) und die zweiten Spreizstege (114) eine unterschiedliche Flexibilität oder Elastizität aufweisen;
wobei die ersten Spreizstege (112) und die zweiten Spreizstege (114) miteinander verzahnt sind.

9. Dübel (100) gemäß einem der Ansprüche 7 bis 8, aufweisend zumindest eines der folgenden Merkmale:
wobei der Spreizbereich (110) in Umfangsrichtung, insbesondere entlang einer gesamten axialen Länge des Spreizbereichs (110), spaltfrei geschlossen ist;
wobei der Kopf (108) geschlossen ist, wobei insbesondere der Kopf (108) eine Sollbruchstelle (120) aufweist, die bei Einbringen eines Befestigungselements (106) in den Dübel (100) unter Öffnung des Kopfes (108) aufbrechbar ist;
wobei der Fuß (102) eine Mitdrehsicherung (126) aufweist, insbesondere ausgebildet als in Umfangsrichtung außenseitig verteilt angeordnete Dorne (128);
wobei zumindest im Spreizbereich (110) ein Aufnahmekanal (130) zum Aufnehmen eines Befestigungselements (106) im Inneren des Dübels (100) mehrere innenseitig hineinragende Überstände (132) aufweist, die als innenseitige Endbereiche von zumindest einem Teil der Spreizelemente (112, 114) ausgebildet sind;
wobei der Kopf (108) und/oder der Fuß (102) ausgebildet ist oder sind, dass dort bei Einführen eines Befestigungselements (106) keine Spreizung erfolgt.

10. Montagekit (134), aufweisend:
mindestens einen Dübel (100) gemäß einem der vorherigen Ansprüche;
ein Befestigungselement (106) zum Einführen in den Dübel (100); und zumindest ein weiteres Befestigungselement (106) zum alternativen Einführen in den Dübel (100), wobei das zumindest eine weitere Befestigungselement (106) im Vergleich zu dem Befestigungselement (106) eine andere Länge und/oder einen anderen Durchmesser aufweist.

11. Montagekit (134) gemäß Anspruch 10, wobei ein Unterschied zwischen dem Durchmesser des Befestigungselements (106) und dem Durchmesser des zumindest einen weiteren Befestigungselements (106) mindestens 1 mm, insbesondere mindestens 1,5 mm, weiter insbesondere mindestens 2 mm, beträgt.

12. Montageanordnung (136), aufweisend:
ein Montagekit (134) gemäß Anspruch 10 oder 11; und
einen Untergrund (118);
wobei der Dübel (100) in den Untergrund (118) eingeführt ist und das Befestigungselement (106) oder das zumindest eine weitere Befestigungselement (106) in den Dübel (100) eingeführt ist.

13. Montageanordnung (136) nach Anspruch 12, aufweisend eines der folgenden Merkmale:
wobei die Spreizstege (112, 114) des Dübels (100) vollumfänglich aufgespreizt sind und der Untergrund (118) ein Vollkörper ist;
wobei die Spreizstege (112, 114) des Dübels (100) in einem Hohlraum (184) des als Hohlkörper ausgebildeten Untergrunds (118) verknotet sind.

14. Verfahren zum Herstellen eines Dübels (100), wobei das Verfahren aufweist:
Bilden einer ersten Komponente (170) mit einer Mehrzahl von in Umfangsrichtung angeordneten ersten Spreizstegen (112); und
Bilden einer mit der ersten Komponente (170) verbundenen zweiten Komponente (180) mit einer dehnbaren zusammenhängenden Matrix (116), welche die ersten Spreizstege (112) zumindest abschnittsweise umfänglich umgibt;
Bilden der Matrix (116) mit einem in einem kraftfreien Zustand größeren Umfang in einem Hülsenabschnitt (181) im Vergleich zu einem geringeren Umfang in einem hohlzylindrischen Dübelabschnitt (185) oder Spreizbereich (110) zwischen einem Fuß (102) des Dübels (100) und dem Hülsenabschnitt (181) ;
wobei die Matrix (116) in dem kraftfreien Zustand in dem Hülsenabschnitt (181) mindestens eine Einbuchtung (189) und mindestens eine Ausbuchtung (187) aufweist, die in einer Umfangsrichtung des Dübels (100) alternierend angeordnet sind, wobei die mindestens eine Ausbuchtung (187) zu einem der ersten Spreizstege (112) korrespondiert;
wobei die mindestens eine Einbuchtung (189) dazu konfiguriert ist, bei Einführen eines Befestigungselements (106) in eine Öffnung (104) des Dübels (100) radial nach außen geklappt oder gedrückt zu werden.

15. Verfahren zum Montieren eines Dübels (100) gemäß einem der vorherigen Ansprüche, wobei das Verfahren aufweist:
Einführen des Dübels (100) in ein Bohrloch in einem Untergrund (118); und
nachfolgend wahlweise Einführen eines Befestigungselements (106) oder eines weiteren Befestigungselements (106) in eine Öffnung des Dübels (100), wodurch die ersten Spreizstege (112) aufspreizen und/oder verknoten und die die ersten Spreizstege (112) umgebende Matrix (116) gedehnt wird, um dadurch die ersten Spreizstege (112) relativ zueinander in Position zu halten, wobei das weitere Befestigungselement (106) im Vergleich zu dem Befestigungselement (106) eine andere Länge und/oder einen anderen Durchmesser aufweist.

## Claims

1. A wall plug (100), comprising:
a first component (170) with a plurality of first strutting bars (112) arranged in circumferential direction;
connected to the first component (170), a second component (180) with a stretchable coherent matrix (116), which matrix (116) encompasses the first strutting bars (112) circumferentially at least in sections, in particular at a wall plug head side;
wherein the matrix (116) comprises in a force-free state in a sleeve section (181) a greater circumference than a hollow cylindrical wall plug section (185) or strutting region (110) between a foot (102) of the wall plug (100) and the sleeve section (181);
wherein the matrix (116) comprises in a force-free state in the sleeve section (181) at least one indentation (189) and at least one filet indentation (187), which are arranged alternatingly in circumferential direction of the wall plug (100), wherein the at least one filet indentation (187) corresponds to one of the first strutting bars (112);
wherein the at least one indentation (189) is configured for being, upon inserting a fixing element (106) into an opening (104) of the wall plug (100), folded or pushed radially outwards.

2. Wall plug (100) according to claim 1, comprising at least one of the following features:
wherein a difference between the greater circumference in the sleeve section (181) and a smaller circumference in the hollow cylindrical wall plug section (185) or strutting region (110) is at least 1 mm, in particular at least 2 mm;
wherein the matrix (116) forms a cap region or a cuff area of a head (108) of the wall plug (100), and in particular encompasses wall plug head side end sections (183) of the first strutting bars (112) on a shell surface side and/or on the face side.

3. Wall plug (100) according to claim 1 or 2,
wherein the matrix (116) comprises a plurality of second strutting bars (114) arranged in circumferential direction, which extend particularly from a cap region or cuff region of the matrix (116) axially in the direction of a foot (102) of the wall plug (100),
wherein in particular the first strutting bars (112) and the second strutting bars (114) in circumferential direction lie, in particular flush, against each other, but are separated from each other.

4. Wall plug (100) according to one of the claims 1 to 3,
wherein the matrix (116) is fully or partially circumferentially closed along the sleeve section (181) of its axial extension, in which sleeve section (181) head side end sections (183) of the first strutting bars (112) of the matrix (116) are covered outwardly at least on a shell surface side.

5. Wall plug (100) according to claim 4, comprising at least one of the following features:
wherein the matrix (116) comprises in the sleeve section (181) at least one expansion gap (122), which is filled at least partially with at least one rib (124) of the first component (170), wherein in particular at least one of the at least one expansion gap (122) runs obliquely to an axial direction of the wall plug (100);
wherein the matrix (116) comprises in a force-free state in the sleeve section (181) a smaller cross-sectional area than a hollow cylindrical wall plug section (185) or strutting region (110) between a foot (102) of the wall plug (100) and the sleeve section (181);
wherein the matrix (116) comprises in a force-free state in the sleeve section (181) a plurality of indentations (189) arranged in circumferential direction.

6. Wall plug (100) according to one of the claims 1 to 5, comprising at least one of the following features:
wherein the matrix (116) is open at a head side face surface (188) of the wall plug (100), wherein in particular at the head side face surface (188) the first strutting bars (112) are laid open outwardly with respect to the matrix (116) or are covered by an exposed skin, in particular a skin like predetermined breaking point (120), of the first component (170);
wherein the matrix (116) covers along a strutting region (110) first partitions of the first strutting bars (112) and lays open second partitions of the first strutting bars (112) arranged between the first partitions;
wherein the stretchable coherent matrix (116) is manufactured from an elastic material;
wherein the stretchable coherent matrix (116) is formed to, upon inserting a fixing element (106) into an opening (104) of the wall plug (100), in particular after inserting the wall plug (100) into a drill hole in a substrate (118) formed as a solid body, hold together the first strutting bars (112);
wherein the first component (170) and the second component (180) form a closed wall plug sleeve;
wherein the first component (170) is a first injection molding component, and the second component (180) is a separate second injection molding component, wherein in particular the first injection molding component is at least partially over injected by the second injection molding component;
wherein the second component (180) is formed from another material, in particular from a material with lower E-modulus and/or lower Shore hardness, than another material, in particular a material with higher E-modulus and/or higher Shore hardness, of the first component (170);
wherein strutting bars (112, 114) are formed to, upon inserting a fixing element (106) into the wall plug (100) inserted into a substrate (118) formed as a solid body, strut jointly;
wherein the strutting bars (112, 114) are formed to, upon inserting a fixing element (106) into the wall plug (100) inserted into a substrate (118) formed as a hollow body, knot with each other;
wherein at least one part of the strutting bars (112, 114) comprises in an axial direction of the wall plug (100) alternatingly wider sections (140) and narrower sections (142).

7. Wall plug (100) according to one of the claims 1 to 6, comprising:
a foot (102) with an opening (104) for inserting a fixing element (106);
a head (108); and a strutting region (110) between the foot (102) and the head (108) with the first strutting bars (112) and/or the second strutting bars (114),
wherein in particular the first strutting bars (112) are connected with each other at the foot (102) and/or at the head (108) and/or wherein the second strutting bars (114) are connected with each other at the foot (102) and/or at the head (108).

8. Wall plug (100) according to one of the claims 3 to 7, comprising at least on of the following features:
wherein the first strutting bars (112) are not connected with the second strutting bars (114), in particular not at the head (108) and/or not at the foot (102) and/or not between the head (108) and the foot (102);
wherein the first strutting bars (112) and the second strutting bars (114) are manufactured from different materials or from the same material;
wherein the first strutting bars (112) and the second strutting bars (114) are arranged alternatingly in circumferential direction;
wherein the first strutting bars (112) and the second strutting bars (114) are formed form-fitted to each other;
wherein the first strutting bars (112) are formed thinner and from a harder material than the second strutting bars (114) or the second strutting bars (114) are formed thinner and from a harder material than the first strutting bars (112);
wherein the first strutting bars (112) and the second strutting bars (114) comprise a different flexibility or elasticity;
wherein the first strutting bars (112) and the second strutting bars (114) are interlocked.

9. Wall plug (100) according to one of the claims 7 to 8, comprising at least one of the following features:
wherein the strutting region (110) is closed in a gap-free manner in circumferential direction, in particular along a total axial length of the strutting region (110);
wherein the head (108) is closed, wherein in particular the head (108) comprises a predetermined breaking point (120), which can be, upon inserting a fixing element (106) into the wall plug (100), under opening of the head (108), broken open;
wherein the foot (102) comprises a co-turning lock (126), in particular formed as spikes (128) arranged distributed on the outside;
wherein at least in the strutting region (110) a reception channel (130) for receiving a fixing element (106) in the inside of the wall plug (100) comprises a plurality of protrusions (132) extending into the inside, which are formed as inside end regions of at least a part of the strutting elements (112, 114);
wherein the head (108) and/or the foot (102) is or are formed such that upon inserting a fixing element (106), no strutting occurs there.

10. Mounting kit (134), comprising:
at least one wall plug (100) according to one of the preceding claims;
a fixing element (106) for inserting into the wall plug (100); and at least one further fixing element (106) for alternatively inserting into the wall plug (100), wherein the at least one further fixing element (106) comprises, in comparison to the fixing element (106), a different length and/or a different diameter.

11. Mounting kit (134) according to claim 10, wherein a difference between the diameter of the fixing element (106) and the diameter of the at least one further fixing element (106) is at least 1 mm, in particular at least 1.5 mm, further in particular at least 2 mm.

12. Mounting arrangement (136), comprising:
a mounting kit (134) according to claim 10 or 11; and
a substrate (118);
wherein the wall plug (100) is inserted into the substrate (118) and the fixing element (106) or the at least one further fixing element (106) is inserted into the wall plug (100).

13. Mounting arrangement (136) according to claim 12, comprising at least one of the following features:
wherein the strutting bars (112, 114) of the wall plug (100) are strutted to the full extent and the substrate (118) is a solid body;
wherein the strutting bars (112, 114) of the wall plug (100) are knotted in a hollow (184) of the substrate (118) formed as a hollow body.

14. Method for manufacturing a wall plug (100), wherein the method comprises:
forming a first component (170) with a plurality of first strutting bars (112) arranged in circumferential direction; and
forming a second component (180) connected with the first component (170) with a stretchable coherent matrix (116), which encompasses the first strutting bars (112) circumferentially at least in sections;
forming the matrix (116) with a circumference in a sleeve section (181), which circumference is, in a force-free state, greater, in comparison to a smaller circumference in a hollow cylindrical wall plug section (185) or strutting region (110) between a foot (102) of the wall plug (100) and the sleeve section (181);
wherein the matrix (116) comprises in the force-free state in the sleeve section (181) at least one indentation (189) and at least one filet indentation (187), which are arranged alternatingly in circumferential direction of the wall plug (100), wherein the at least one filet indentation (187) corresponds to one of the first strutting bars (112);
wherein the at least one indentation (189) is configured for being, upon inserting a fixing element (106) into an opening (104) of the wall plug (100), folded or pushed radially outwards.

15. Method for mounting a wall plug (100) according to one of the preceding claims, wherein the method comprises:
inserting the wall plug (100) in a drill hole in a substrate (118); and subsequently optionally inserting a fixing element (106) or a further fixing element (106) into an opening of the wall plug (100), whereby the first strutting bars (112) strut and/or knot and the matrix (116) surrounding the first strutting bars (112) is stretched to thereby hold in position the first strutting bars (112) relative to each other, wherein the further fixing element (106), in comparison to the fixing element (106), comprises a different length and/or a different diameter.

## Revendications

1. Cheville (100), présentant :
un premier composant (170) avec une multitude de premières barrettes d'écartement (112) disposées dans la direction périphérique ; et
un deuxième composant (180) relié au premier composant (170) avec une matrice (116) continue extensible, laquelle matrice (116) entoure au moins par endroits, en particulier côté tête de cheville, de manière périphérique les premières barrettes d'écartement (112) ;
**caractérisée en ce que** la matrice (116) présente, dans un état sans force, dans une section de douille (181), une périphérie plus grande qu'une section de cheville (185) ou une zone d'écartement (110) cylindrique creuse entre un pied (102) de la cheville (100) et la section de douille (181) ;
dans laquelle la matrice (116) présente, dans l'état sans force, dans la section de douille (181), au moins un bombement concave (189) et au moins un bombement convexe (187), qui sont disposés en alternance dans une direction périphérique de la cheville (100), dans laquelle au moins un bombement convexe (187) correspond à une des premières barrettes d'écartement (112) ;
dans laquelle au moins un bombement concave (189) est configuré pour être rabattu ou pressé radialement vers l'extérieur lors de l'introduction d'un élément de fixation (106) dans une ouverture (104) de la cheville (100) .

2. Cheville (100) selon la revendication 1, présentant au moins une des caractéristiques suivantes :
**caractérisée en ce qu'**une différence entre la périphérie plus grande dans la section de douille (181) et une périphérie plus petite dans la section de cheville (185) ou la zone d'écartement (110) cylindrique creuse est d'au moins 1 mm, en particulier d'au moins 2 mm ;
dans laquelle la matrice (116) forme une zone de capuchon ou une zone de manchon d'une tête (108) de la cheville (100) et entoure côté surface enveloppante et/ou côté frontal en particulier des sections d'extrémité (183), côté tête de cheville, des premières barrettes d'écartement (112).

3. Cheville (100) selon la revendication 1 ou 2, **caractérisée en ce que** la matrice (116) présente une multitude de deuxièmes barrettes d'écartement (114) disposées dans la direction périphérique, lesquelles s'étendent en particulier en partant d'une zone de capuchon ou d'une zone de manchon de la matrice (116) de manière axiale en direction d'un pied (102) de la cheville (100), dans laquelle en particulier les premières barrettes d'écartement (112) et les deuxièmes barrettes d'écartement (114) reposent les unes sur les autres dans la direction périphérique, en particulier en affleurement, sont toutefois séparées les unes des autres.

4. Cheville (100) selon l'une quelconque des revendications 1 à 3, **caractérisée en ce que** la matrice (116) est fermée en totalité ou partiellement en périphérie le long de la section de manchon (181) de son extension axiale, dans laquelle section de manchon (181) des sections d'extrémité (183), côté tête, des premières barrettes d'écartement (112) sont recouvertes par la matrice (116) vers l'extérieur au moins côté surface enveloppante.

5. Cheville (100) selon la revendication 4, présentant au moins une des caractéristiques suivantes :
**caractérisée en ce que** la matrice (116) présente dans la section de douille (181) au moins un joint de dilatation (122), qui est rempli au moins partiellement d'au moins une nervure (124) du premier composant (170), dans laquelle en particulier au moins un des joints de dilatation (122) s'étend de manière oblique par rapport à une direction axiale de la cheville (100) ;
dans laquelle la matrice (116) présente dans un état sans force dans la section de douille (181) une surface de section transversale inférieure à une section de cheville (185) ou une zone d'écartement (110) cylindrique creuse entre un pied (102) de la cheville (100) et la section de manchon (181) ;
dans laquelle la matrice (116) présente dans un état sans force dans la section de manchon (181) une multitude de bombements concaves (189) disposés dans la direction périphérique.

6. Cheville (100) selon l'une quelconque des revendications 1 à 5, présentant au moins une des caractéristiques suivantes :
**caractérisée en ce que** la matrice (116) est ouverte sur une surface frontale (188), côté tête, de la cheville (100), dans laquelle les premières barrettes d'écartement (112) sont à découvert vers l'extérieur par rapport à la matrice (116) en particulier sur la face frontale (188) côté tête, ou sont recouvertes d'une pellicule à découvert, en particulier d'un point de rupture théorique (120) de type pellicule, du premier composant (170) ;
dans laquelle la matrice (116) recouvre le long d'une zone d'écartement (110) des premières zones partielles des premières barrettes d'écartement (112) et découvre des deuxièmes zones partielles, disposées entre les premières zones partielles, des premières barrettes d'écartement (112) ;
dans laquelle la matrice (116) continue extensible est fabriquée à partir d'un matériau élastique ;
dans laquelle la matrice (116) continue extensible est réalisée pour maintenir regroupées côté tête de cheville les premières barrettes d'écartement (112) en dilatant la matrice (116) lors de l'introduction d'un élément de fixation (106) dans une ouverture (104) de la cheville (100), en particulier après l'introduction de la cheville (100) dans un trou d'alésage dans un support (118) réalisé en tant que corps massif ;
dans laquelle le premier composant (170) et le deuxième composant (180) forment une douille de cheville fermée ;
dans laquelle le premier composant (170) est un premier composant moulé par injection et le deuxième composant (180) est un deuxième composant moulé par injection séparé, dans laquelle en particulier le premier composant moulé par injection est au moins partiellement surmoulé par le deuxième composant moulé par injection ;
dans laquelle le deuxième composant (180) est réalisé à partir d'un autre matériau, en particulier à partir d'un matériau avec un module d'élasticité inférieur et/ou avec une dureté Shore inférieure à un autre matériau, en particulier un matériau avec un module d'élasticité plus élevé et/ou une dureté Shore plus élevée, du premier composant (170) ;
dans laquelle les barrettes d'écartement (112, 114) sont réalisées pour s'ouvrir en s'écartant conjointement lors de l'introduction d'un élément de fixation (106) dans la cheville (100) introduite dans un support (118) réalisé en tant que corps massif ;
dans laquelle les barrettes d'écartement (112, 114) sont réalisées pour se nouer entre elles lors de l'introduction d'un élément de fixation (106) dans la cheville (100) introduite dans un support (118) réalisé en tant que corps creux ;
dans laquelle au moins une partie des barrettes d'écartement (112, 114) présente dans la direction axiale de la cheville (100) en alternance des sections plus larges (140) et des sections plus étroites (142).

7. Cheville (100) selon l'une quelconque des revendications 1 à 6, présentant :
un pied (102) avec une ouverture (104) pour introduire un élément de fixation (106) ;
une tête (108) ; et
une zone d'écartement (110) entre le pied (102) et la tête (108) avec les premières barrettes d'écartement (112) et/ou les deuxièmes barrettes d'écartement (114),
**caractérisée en ce qu'**en particulier les premières barrettes d'écartement (112) sont reliées entre elles au pied (102) et/ou à la tête (108) et/ou dans laquelle les deuxièmes barrettes d'écartement (114) sont reliées entre elles au pied (102) et/ou à la tête (108).

8. Cheville (100) selon l'une quelconque des revendications 3 à 7, présentant au moins une des caractéristiques suivantes :
**caractérisée en ce que** les premières barrettes d'écartement (112) ne sont pas reliées aux deuxièmes barrettes d'écartement (114), en particulier pas à la tête (108) et/ou pas au pied (102) et/ou pas entre la tête (108) et le pied (102) ;
dans laquelle les premières barrettes d'écartement (112) et les deuxièmes barrettes d'écartement (114) sont fabriquées à partir de différents matériaux ou à partir du même matériau ;
dans laquelle les premières barrettes d'écartement (112) et les deuxièmes barrettes d'écartement (114) sont disposées en alternance dans la direction périphérique ;
dans laquelle les premières barrettes d'écartement (112) et les deuxièmes barrettes d'écartement (114) sont réalisées par complémentarité de forme les unes par rapport aux autres ;
dans laquelle les premières barrettes d'écartement (112) sont réalisées plus fines et à partir d'un matériau plus solide que les deuxièmes barrettes d'écartement (114) ou les deuxièmes barrettes d'écartement (114) sont réalisées plus fines et à partir d'un matériau plus solide que les premières barrettes d'écartement (112) ;
dans laquelle les premières barrettes d'écartement (112) et les deuxièmes barrettes d'écartement (114) présentent une flexibilité ou une élasticité différente ;
dans laquelle les premières barrettes d'écartement (112) et les deuxièmes barrettes d'écartement (114) sont engrenées entre elles.

9. Cheville (100) selon l'une quelconque des revendications 7 à 8, présentant au moins une des caractéristiques suivantes :
**caractérisée en ce que** la zone d'écartement (110) est fermée sans interstice dans la direction périphérique, en particulier le long d'une longueur axiale totale de la zone d'écartement (110) ;
dans laquelle la tête (108) est fermée, dans laquelle en particulier la tête (108) présente un point de rupture théorique (120), qui peut être rompu lors de l'introduction d'un élément de fixation (106) dans la cheville (100) en ouvrant la tête (108) ;
dans laquelle le pied (102) présente un blocage d'entraînement en rotation (126), en particulier est réalisé en tant que mandrins (128) disposés de manière répartie côté extérieur dans la direction périphérique ;
dans laquelle un canal de réception (130) pour recevoir un élément de fixation (106) dans l'intérieur de la cheville (100) présente au moins dans la zone d'écartement (110) plusieurs débords (132) dépassant côté intérieur, qui sont réalisés en tant que zones d'extrémité côté intérieur d'au moins une partie des éléments d'écartement (112, 114) ;
dans laquelle la tête (108) et/ou le pied (102) est ou sont réalisé(s) pour qu'aucun écartement ne soit effectué ici lors de l'introduction d'un élément de fixation (106) .

10. Kit de montage (134) présentant :
au moins une cheville (100) selon l'une quelconque des revendications précédentes ;
un élément de fixation (106) destiné à être introduit dans la cheville (100) ; et
au moins un autre élément de fixation (106) destiné à être introduit en variante dans la cheville (100), **caractérisé en ce qu'**au moins un autre élément de fixation (106) présente en comparaison avec l'élément de fixation (106) une autre longueur et/ou un autre diamètre.

11. Kit de montage (134) selon la revendication 10, **caractérisé en ce qu'**une différence entre le diamètre de l'élément de fixation (106) et le diamètre d'au moins un autre élément de fixation (106) est d'au moins 1 mm, en particulier d'au moins 1,5 mm, plus particulièrement d'au moins 2 mm.

12. Ensemble de montage (136) présentant :
un kit de montage (134) selon la revendication 10 ou 11 ; et
un support (118) ;
**caractérisé en ce que** la cheville (100) est introduite dans le support (118) et l'élément de fixation (106) ou au moins un autre élément de fixation (106) est introduit dans la cheville (100).

13. Ensemble de montage (136) selon la revendication 12, présentant une des caractéristiques suivantes :
**caractérisé en ce que** les barrettes d'écartement (112, 114) de la cheville (100) sont ouvertes par écartement sur toute la périphérie et le support (118) est un corps massif ;
dans lequel les barrettes d'écartement (112, 114) de la cheville (100) sont nouées dans un espace creux (184) du support (118) réalisé en tant que corps creux.

14. Procédé pour fabriquer une cheville (100), **caractérisé en ce que** le procédé présente :
la formation d'un premier composant (170) avec une multitude de premières barrettes d'écartement (112) disposées dans la direction périphérique ; et
la formation d'un deuxième composant (180) relié au premier composant (170) avec une matrice (116) continue extensible, laquelle entoure au moins par endroits en périphérie les premières barrettes d'écartement (112) ;
la formation de la matrice (116) avec une périphérie plus grande dans un état sans force dans une section de douille (181) en comparaison avec une périphérie inférieure dans une section de cheville (185) ou une zone d'écartement (110) cylindrique creuse entre un pied (102) de la cheville (100) et la section de douille (181) ;
dans lequel la matrice (116) présente dans l'état sans force dans la section de douille (181) au moins un bombement concave (189) et au moins un bombement convexe (187), qui sont disposés en alternance dans une direction périphérique de la cheville (100), dans lequel au moins un bombement convexe (187) correspond à une des premières barrettes d'écartement (112) ;
dans lequel au moins un bombement concave (189) est configuré pour être rabattu ou pressé radialement vers l'extérieur lors de l'introduction d'un élément de fixation (106) dans une ouverture (104) de la cheville (100) .

15. Procédé pour monter une cheville (100) selon l'une quelconque des revendications précédentes, **caractérisé en ce que** le procédé présente :
l'introduction de la cheville (100) dans un trou d'alésage dans un support (118) ;
et
par la suite au choix l'introduction d'un élément de fixation (106) ou d'un autre élément de fixation (106) dans une ouverture de la cheville (100), ce qui a pour effet que les premières barrettes d'écartement (112) s'ouvrent en s'écartant et/ou se nouent et la matrice (116) entourant les premières barrettes d'écartement (112) est dilatée pour maintenir ce faisant en position les unes par rapport aux autres les premières barrettes d'écartement (112), dans lequel l'autre élément de fixation (106) présente en comparaison avec l'élément de fixation (106) une autre longueur et/ou un autre diamètre.
